(19) Europäisches Patentamt
European Patent Office
Office européen des brevets

(11) **EP 4 664 861 A1**

(12) **EUROPEAN PATENT APPLICATION**
published in accordance with Art. 153(4) EPC

(43) Date of publication:
**17.12.2025 Bulletin 2025/51**

(21) Application number: **24766344.6**

(22) Date of filing: **01.03.2024**

(51) International Patent Classification (IPC):
**H04L 67/61** (2022.01)

(52) Cooperative Patent Classification (CPC):
**H04L 43/0852; H04L 43/16; H04L 67/51; H04L 67/61; H04W 4/50; H04W 24/08; H04W 88/18**

(86) International application number:
**PCT/CN2024/079496**

(87) International publication number:
**WO 2024/183624 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.03.2023 CN 202310248889**

(71) Applicant: **Huawei Technologies Co., Ltd.**
**Shenzhen, Guangdong 518129 (CN)**

(72) Inventors:
• **ZHU, Fangyuan**
  **Shenzhen, Guangdong 518129 (CN)**
• **XU, Shengfeng**
  **Shenzhen, Guangdong 518129 (CN)**
• **LI, Yan**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD, APPARATUS, AND SYSTEM**

(57) This application relates to a communication method, an apparatus, and a system. A first network element learns that a terminal device requests to access a first application, and selects a first data network access identifier for the terminal device, where a sum of a first delay and a second delay is less than or equal to an access delay threshold for the first application. The first delay is a transmission delay between the terminal device and a core network device corresponding to the first data network access identifier or a transmission delay between an access network device serving the terminal device and a core network device corresponding to the first data network access identifier, the second delay is a processing delay of an edge application server in a first data network, the first data network access identifier identifies the first data network, and the edge application server is configured to support the first application. The selection performed by the first network element helps the terminal device quickly access the first application, to improve experience of accessing a service of the application by a user using the terminal device.

[FIG. 3]

```
┌─────────────────────────────────────────────┐
│ A first network element learns that UE       │──S301
│ requests to access a first application        │
└─────────────────────────────────────────────┘
                      │
                      ▼
┌─────────────────────────────────────────────┐
│ The first network element selects a first     │
│ DNAI for the UE, where a sum of a first delay  │
│ and a second delay is less than or equal to an │
│ access delay threshold for the first           │──S302
│ application, the first delay is a transmission │
│ delay between the UE and a core network device │
│ corresponding to the first DNAI or a           │
│ transmission delay between an access network   │
│ device serving the UE and a core network       │
│ device corresponding to the first DNAI, and    │
│ the second delay is a processing delay of an   │
│ EAS in an area indicated by the first DNAI     │
└─────────────────────────────────────────────┘
```

## Description

CROSS-REFERENCE TO RELATED APPLICATIONS

This application claims priority to Chinese Patent Application No. 202310248889.4, filed with the China National Intellectual Property Administration on March 3, 2023 and entitled "COMMUNICATION METHOD, APPARATUS, AND SYSTEM", which is incorporated herein by reference in its entirety.

TECHNICAL FIELD

This application relates to the field of communication technologies, and in particular, to a communication method, an apparatus, and a system.

BACKGROUND

In a conventional technology, after discovering a data network (data network, DN) closest to user equipment (user equipment, UE), a session management function (session management function, SMF) may provide the UE with an address of an edge application server (edge application server, EAS) in the DN. The DN includes a plurality of local data networks (local data networks, LDNs), for example, an LDN 1, an LDN 2, and an LDN 3. An EAS 1, an EAS 2, and an EAS 3 that support a same application are located in different LDNs, and provide a same service for the UE.

When the UE requests to access the application, the SMF selects the LDN 1 closest to the UE, so that an edge application server discovery function (edge application server discovery function, EASDF) may send an address of the EAS 1 in the LDN 1 to the UE, and the UE accesses, based on the address, the application supported by the EAS 1.

However, the EAS 1 selected by the SMF may not be capable of providing good quality of service for the UE.

SUMMARY

Embodiments of this application provide a communication method, an apparatus, and a system, to help improve quality of service provided for a terminal device.

According to a first aspect, a communication method is provided. The method may be performed by a first network element, may be performed by another device having a function of the first network element, or may be performed by a chip system (or a chip) or another functional module, where the chip system or the functional module can implement the function of the first network element, and the chip system or the functional module is, for example, disposed in the first network element. Optionally, the first network element is, for example, an SMF, or a module or a device that has a data network access identifier selection function. The method includes: The first network element learns that a terminal device requests to access a first application. The first network element selects a first data network access identifier for the terminal device, where a sum of a first delay and a second delay is less than or equal to an access delay threshold for the first application, the first delay is a transmission delay between the terminal device and a core network device corresponding to the first data network access identifier or a transmission delay between an access network device serving the terminal device and a core network device corresponding to the first data network access identifier, the second delay is a processing delay of an edge application server in a first data network, the first data network access identifier identifies the first data network, and the edge application server is configured to support the first application.

According to this embodiment of this application, the selection performed by the first network element helps the terminal device quickly access the first application, so that the terminal device can obtain a faster response from the edge application server for the access to the application. This helps reduce a data transmission delay between the terminal device and the edge application server that supports the application, to improve experience of accessing a service of the application by a user using the terminal device.

In an optional implementation, a sum of the first delay, the second delay, and a third delay is less than or equal to the access delay threshold for the first application, and the third delay includes a transmission delay between the core network device and the edge application server. In this embodiment of this application, it is expected to reduce a delay between the terminal device and the edge application server, and the delay between the terminal device and the edge application server may further include the transmission delay between the core network device corresponding to the data network access identifier and the edge application server in addition to the first delay and the second delay. Therefore, the third delay may be further considered when the data network access identifier is selected for the terminal device. This helps the terminal device quickly access the first application, to further improve quality of service obtained by the terminal device.

In an optional implementation, the method further includes: The first network element obtains at least one data network access identifier, where N edge application servers in at least one data network all support the first application, and the at least one data network access identifier identifies the at least one data network, where N is a positive integer. That the first network element selects the first data network access identifier for the terminal device includes: The first network element selects the first data network access identifier for the terminal device from the at least one data network access identifier. The first network element may have at least one option. For example, the first network element may select the first data network access identifier for the terminal device from the at least one data network access identifier. A larger quantity of the at least one data network access identifier indicates a larger selection range, and is more conducive to the quick access of the terminal device to the first application. A smaller quantity of the at least one data network access identifier indicates a more simplified processing process of the first network element, and can improve selection efficiency.

In an optional implementation, the method further includes: The first network element obtains processing delays of the N edge application servers. When selecting the data network access identifier for the terminal device, the first network element may make a reference to the processing delay of the edge application server. For example, the first network element may obtain the processing delays of the N edge application servers, so that the first network element may select the first data network access identifier for the terminal device from the at least one data network access identifier based on the obtained processing delays, to help the terminal device quickly access the first application.

In an optional implementation, that the first network element obtains the processing delays of the N edge application servers includes: The first network element receives association information from a second network element, where the association information indicates an association between load and a processing delay that are of each edge application server in the N edge application servers. The first network element determines the processing delays of the N edge application servers based on the association information and user information, where the user information includes a quantity of access users of each edge application server in the N edge application servers. The first network element may learn of the association between the load and the processing delay of each edge application server in the N edge application servers by using the received association information, and the first network element may also learn of the quantity of access users of each edge application server in the N edge application servers, so that the first network element can determine the processing delays of the N edge application servers with reference to the two types of information.

In an optional implementation, that the first network element obtains the processing delays of the N edge application servers includes: The first network element sends a first request to a second network element, where optionally, the first request may be for requesting to obtain a processing delay of an EAS in a DN. The first network element receives a response to the first request, where the response includes the processing delays of the N edge application servers. The processing delays of the N edge application servers may be stored in the second network element, and the first network element may obtain the processing delays of the N edge application servers by sending the first request to the second network element.

In an optional implementation, the first request includes one or more of the following: an identifier of the terminal device, an identifier of the first application, or the at least one data network access identifier. For example, the first request includes the identifier of the terminal device, and the second network element may query edge application servers historically accessed by the terminal device, and send processing delays of these edge application servers to the first network element. For another example, the first request includes the identifier of the first application, and the second network element may query edge servers that can support the first application, and send processing delays of these edge application servers to the first network element. For still another example, the first request includes the at least one data network access identifier, so that the second network element may send the processing delays of the N edge application servers in the data network identified by the at least one data network access identifier to the first network element. It can be learned that implementation of the first request is flexible.

In an optional implementation, the processing delays of the N edge application servers include a processing delay of one or more or all of the N edge application servers, in other words, the processing delays of the N edge application servers include only a processing delay of a part or all of the N edge application servers. One or more edge application servers may exist in a data network identified by one data network access identifier. For example, performance of different edge application servers in the one or more edge application servers may be the same or different. If performance of different edge application servers in the one or more edge application servers is different, the processing delays of the N edge application servers may include the processing delays of all the N edge application servers, and the first network element may achieve a finer selection granularity when selecting the data network access identifier.

Alternatively, if performance of different edge application servers in the one or more edge application servers is the same or similar, the processing delays of the N edge application servers may include a processing delay of a part or all of the N edge application servers. For example, for any data network access identifier, a processing delay of an edge application server in a data network identified by the data network access identifier only needs to include a processing delay of any edge application server in the data network, and does not need to include processing delays of all edge application servers in the data network. This can reduce a quantity of obtained processing delays of edge application servers, to simplify a processing process.

In an optional implementation, the method further includes: The first network element receives address information of the N edge application servers from the second network element, where the N edge application servers are located in the at least one data network, the at least one data network is identified by the at least one data network access identifier, and the at least one data network includes the first data network. The first network element may select only the data network access identifier for the terminal device, and does not further select the edge application server. Alternatively, the first network element may obtain the address information of the edge application server, so that the first network element may directly select, for the terminal device, a specific edge application server in a data network identified by a specific data network access identifier, to select an edge application server that is more suitable for the terminal device. For example, an edge application server having a shorter delay with the terminal device may be selected, to further improve the quality of service obtained by the terminal device.

In an optional implementation, the method further includes: The first network element sends address information of a first edge application server in the first data network to the terminal device, where the first edge application server is an edge application server selected by the first network element for the terminal device. If the first network element selects the first edge application server for the terminal device, the first network element may send the address information of the first edge application server to the terminal device, so that the terminal device can access the first edge application server based on the address information. For example, the first network element may directly send the address information to the terminal device without forwarding performed by another network element. Alternatively, the first network element may send the address information to the terminal device through forwarding performed by another network element. For example, the first network element may send the address information to the terminal device through an EASDF or another network element.

In an optional implementation, the method further includes: The first network element receives the access delay threshold from the second network element. When selecting the data network access identifier for the terminal device, the first network element may make a reference to the access delay threshold for the first application. Therefore, the first network element may obtain the access delay threshold for the first application in advance.

In an optional implementation, the method further includes: The first network element notifies the second network element that a quantity of access users of the first edge application server changes; or the first network element updates a quantity of access users of the first edge application server, where the first edge application server is in the first data network. The information indicating the association between the load and the processing delay of each edge application server in the N edge application servers may be stored in the second network element. To enable the second network element to update load of the N edge application servers in a timely manner, when load of the first edge application server (for example, the quantity of access users of the first edge application server) changes, the first network element may notify the second network element (for example, the first network element sends a request to the second network element), so that the second network element can update the quantity of access users of the first edge application server accordingly, where an update manner is, for example, an increase or a decrease. Alternatively, the information indicating the association between the load and the processing delay of each edge application server in the N edge application servers may be stored in the second network element, and the first network element may autonomously update the quantity of access users of the first edge application server. In this manner, the first network element or the second network element can autonomously determine a quantity of access users of a specific edge application server, without requesting to learn of the quantity of access users from the edge application server, so that an interaction process between network elements, signaling overheads, and a processing delay can be reduced.

According to a second aspect, another communication method is provided. The method may be performed by a second network element, may be performed by another device having a function of the second network element, or may be performed by a chip system (or a chip) or another functional module. The chip system or the functional module can implement the function of the second network element, and the chip system or the functional module is, for example, disposed in the second network element. Optionally, the second network element is, for example, a UDR. The method includes: The second network element receives a first request from a first network element, where the first request is for requesting to obtain a processing delay of an edge application server in a data network. The second network element sends a response to the first request to the first network element, where the response includes processing delays of N edge application servers in at least one data network, and the at least one data network is identified by at least one data network access identifier, where N is a positive integer.

In this embodiment of this application, the second network element may send the processing delays of the N edge application servers to the first network element in response to the request of the first network element, so that the first network element can select a data network access identifier for a terminal device. This is equivalent to adding a reference element for the first network element to select the data network access identifier in this embodiment of this application, so that a selection result of the first network element is more conducive to quickly accessing a first application by the terminal device, to help improve quality of service obtained by the terminal device.

In an optional implementation, the first request includes one or more of the following: an identifier of a terminal device that at least one edge application server in the N edge application servers is capable of serving, an identifier of a first application that at least one edge application server in the N edge application servers supports, or the at least one data network access identifier.

In an optional implementation, the method further includes: The second network element receives association information from a network exposure function network element, where the association information indicates an association between load and a processing delay that are of each edge application server in the N edge application servers. The second network element determines the processing delays of the N edge application servers based on the association information and user information, where the user information includes a quantity of access users of each edge application server in the N edge application servers.

In an optional implementation, the method further includes: The second network element learns that a quantity of access users of a first edge application server changes, where the first edge application server is located in a first data network in the at least one data network, and the at least one data network is identified by the at least one data network access identifier. The second network element updates the quantity of access users of the first edge application server.

For technical effects brought by the optional implementations of the second aspect, refer to the descriptions of the technical effects of the first aspect or the corresponding implementations.

According to a third aspect, an apparatus is provided. The apparatus may implement a function of the first network element according to the first aspect. The apparatus includes a processing unit and a transceiver unit. The processing unit is configured to learn that a terminal device requests to access a first application. The processing unit is further configured to select a first data network access identifier for the terminal device, where a sum of a first delay and a second delay is less than or equal to an access delay threshold for the first application, the first delay is a transmission delay between the terminal device and a core network device corresponding to the first data network access identifier or a transmission delay between an access network device serving the terminal device and a core network device corresponding to the first data network access identifier, the second delay is a processing delay of an edge application server in a first data network, the first data network access identifier identifies the first data network, and the edge application server is configured to support the first application.

According to a fourth aspect, another apparatus is provided. The apparatus includes one or more processors, configured to execute computer program instructions. When the computer program instructions are executed by the one or more processors, the apparatus is enabled to perform the method according to any implementation of the first aspect.

According to a fifth aspect, still another apparatus is provided. The apparatus may implement a function of the second network element according to the second aspect. The apparatus includes a processing unit and a transceiver unit. The transceiver unit is configured to receive a first request from a first network element, where the first request is for requesting to obtain a processing delay of an edge application server in a data network. The transceiver unit is further configured to send a response to the first request to the first network element, where the response includes processing delays of N edge application servers in at least one data network, and the at least one data network is identified by at least one data network access identifier, where N is a positive integer.

According to a sixth aspect, yet another apparatus is provided. The apparatus includes one or more processors, configured to execute computer program instructions. When the computer program instructions are executed by the one or more processors, the apparatus is enabled to perform the method according to any implementation of the second aspect.

According to a seventh aspect, a communication system is provided. The communication system may include a first network element and a second network element. The first network element is configured to perform the method according to any implementation of the first aspect, where the first network element is specifically configured to obtain a processing delay of an edge application server from the second network element. The second network element is configured to perform the method according to any implementation of the second aspect.

According to an eighth aspect, still another communication method is provided. The communication method may be performed by the communication system according to the seventh aspect. The method may include: The first network element sends a first request to the second network element, where the first request is for requesting to obtain a processing delay of an edge application server in a data network. The second network element receives the first request, and sends a response to the first request to the first network element, where the response includes processing delays of N edge application servers in at least one data network, and the at least one data network is identified by at least one data network access identifier, where N is a positive integer. The first network element receives the response.

According to a ninth aspect, another communication system is provided. The communication system may include a first network element and a terminal device. The first network element is configured to perform the method according to any implementation of the first aspect. The terminal device is configured to receive address information of an edge application server.

For example, the first network element is configured to: learn that the terminal device requests to access a first application, select a first data network access identifier and/or a first edge application server in a first data network for the terminal device, and send address information of the first edge application server to the terminal device, where the first data network access identifier identifies the first data network, and the first edge application server is configured to support the first application. The terminal device is configured to receive the address information. A sum of a first delay and a second delay is less than or equal to an access delay threshold for the first application, the first delay is a transmission delay between the terminal device and a core network device corresponding to the first data network access identifier or a transmission delay between an access network device serving the terminal device and a core network device corresponding to the first data network access identifier, and the second delay is a processing delay of the first edge application server.

According to a tenth aspect, yet another communication method is provided. The communication method may be performed by the communication system according to the ninth aspect. The method may include: The first network element learns that the terminal device requests to access a first application. The first network element selects a first data network access identifier and/or a first edge application server in a first data network for the terminal device, where the first data network access identifier identifies the first data network, and the first edge application server is configured to support the first application. The first network element sends address information of the first edge application server to the terminal device. The terminal device receives the address information. A sum of a first delay and a second delay is less than or equal to an access delay threshold for the first application, the first delay is a transmission delay between the terminal device and a core network device corresponding to the first data network access identifier or a transmission delay between an access network device serving the terminal device and a core network device corresponding to the first data network access identifier, and the second delay is a processing delay of the first edge application server.

According to an eleventh aspect, a computer-readable storage medium is provided. The computer-readable storage medium includes a computer program; and when the computer program is run on a computing device, the computing device is enabled to perform the method according to any implementation of the first aspect, the second aspect, the eighth aspect, or the tenth aspect.

According to a twelfth aspect, a chip is provided. The chip is coupled to a memory, and is configured to read and execute program instructions stored in the memory, to implement the method according to any implementation of the first aspect, the second aspect, the eighth aspect, or the tenth aspect.

According to a thirteenth aspect, a computer program product is provided. When the computer program product is invoked by a computer, the computer is enabled to perform the method according to any implementation of the first aspect, the second aspect, the eighth aspect, or the tenth aspect.

BRIEF DESCRIPTION OF DRAWINGS

FIG. 1A is a diagram of selecting a closest EAS for UE by a network side;
FIG. 1B is a diagram of delays corresponding to different service experience of UE;
FIG. 2A and FIG. 2B are diagrams of two application scenarios according to an embodiment of this application;
FIG. 3 is a flowchart of a first communication method according to an embodiment of this application;
FIG. 4 is a flowchart of a second communication method according to an embodiment of this application;
FIG. 5 is a flowchart of a third communication method according to an embodiment of this application;
FIG. 6 is a flowchart of a fourth communication method according to an embodiment of this application;
FIG. 7 is a flowchart of a fifth communication method according to an embodiment of this application;
FIG. 8 is a diagram of an apparatus according to an embodiment of this application;
FIG. 9 is a diagram of another apparatus according to an embodiment of this application;
FIG. 10 shows an example of a transmission delay corresponding to a DNAI according to an embodiment of this application;
FIG. 11 shows another example of a transmission delay corresponding to a DNAI according to an embodiment of this application;
FIG. 12 shows an example of an association between load and a processing delay that are of an EAS according to an embodiment of this application;
FIG. 13 shows an example of an access delay threshold for an application according to an embodiment of this application; and
FIG. 14 shows an example of address information of an EAS according to an embodiment of this application.

DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of' means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects. For example, A/B indicates A or B. "At least one of the following items (pieces)", "one or more of", or a similar expression refers to any combination of these items, including a single item (piece) or any combination of a plurality of items (pieces). For example, at least one of a, b, or c, or one or more of a, b, or c, represents a, b, c, a and b, a and c, b and c, or a, b, and c. Each of a, b, or c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of objects. In addition, step numbers in embodiments described in embodiments of this application are merely intended to distinguish between different steps, but are not intended to limit a sequence of the steps. For example, S501 may occur before S502, may occur after S502, or may occur at the same time with S502.

The following describes some terms or concepts in embodiments of this application, to facilitate understanding of a person skilled in the art.

(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to: cellular communication, device-to-device (device-to-device, D2D) communication, V2X, machine-to-machine/machine type communication (machine-to-machine/machine type communication, M2M/MTC), an Internet of things (Internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wear, smart transportation, a smart city (smart city), an uncrewed aerial vehicle, and a robot. The terminal device may be sometimes referred to as UE, a terminal, an access station, a UE station, a remote station, a wireless communication device, a user apparatus, or the like.

For ease of description, an example in which the terminal device is UE is used for description in embodiments of this application.

(2) A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequently evolving base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). An example in which the access network device is a base station is used below for description. The base station may communicate with the terminal device, or may communicate with the terminal device via a relay station. The terminal device may communicate with a plurality of base stations in different access technologies. The core network device is configured to implement mobility management, data processing, session management, policy and charging, and the like. Names of devices that implement core network functions in systems using different access technologies may be different. This is not limited in embodiments of this application. Using a 5th generation (5th generation, 5G) mobile communication system as an example, the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device to implement the function. The apparatus may be installed in the network device. In the technical solutions provided in embodiments of this application, an example in which the apparatus configured to implement the function of the network device is a network device is used to describe the technical solutions provided in embodiments of this application.

The following describes technical features in embodiments of this application.

Cloud gaming is a gaming method based on cloud computing. In terms of a principle of the cloud gaming, UE only needs to perform simple decoding output and upload an operation instruction of a player, where the UE herein is not limited to a personal computer (personal computer, PC), a notebook computer, a tablet computer, a mobile phone, a television box, or the like. Therefore, the cloud gaming greatly reduces a performance requirement for the UE, and the UE only needs to have a specific decoding capability. In a running mode of the cloud gaming, all games are run in an application server. The UE may send a user command (user command) to the application server. The application server may compress a rendered game picture and then transmit a compressed game picture to the UE through a network in a form of, for example, a video stream (video stream). In comparison with traditional games, a cloud gaming platform is introduced to move functions such as computing and rendering of games to cloud, and advantages of high bandwidth and low latency of a 5th generation (5th generation, 5G) mobile communication system network are fully utilized through cloud-network integration. This improves service awareness of the cloud gaming. In this way, the performance requirement for the UE is reduced, and game experience is more easily and more conveniently achieved.

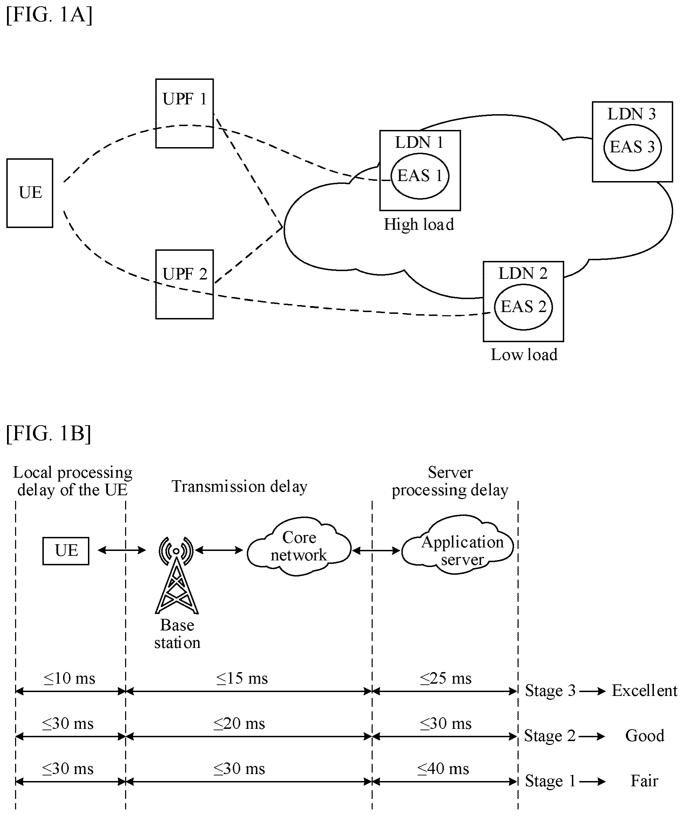

The cloud gaming is a high-interaction service, and a service delay is a highest requirement for a cloud gaming solution. From an end-to-end perspective (for example, the UE is one end, and the application server is the other end), the service delay includes a transmission delay (transmission delay) of data in the network and a processing delay of the application server that provides the service. The transmission delay of the data in the network includes, for example, a transmission delay of the data between the UE and the application server. The processing delay of the application server is also referred to as a server processing delay (server processing delay), or referred to as quality of service of the server. The transmission delay of the data in the network is related to many complex factors such as network bandwidth, a network topology, and a user plane path. The server processing delay (or the quality of service of the server) is related to load of the server, a capability of a graphics processing unit (graphics processing unit, GPU), and the like. Refer to FIG. 1B. Examples of delays for different service experience of UE are as follows, where the UE in FIG. 1B is, for example, a mobile phone or other UE.

At an initial stage (referred to as a stage (stage) 1), an end-to-end delay of an operation response is less than or equal to 100 ms. A local processing delay on a UE side is less than or equal to 30 ms, a transmission delay of data in the network is less than or equal to 30 ms, and a server processing delay is less than or equal to 40 ms. In this case, a game operation delay is within an acceptable range, and service experience of a user is fair (fair).

At a comfortable-experience stage (referred to as a stage 1), an end-to-end delay of an operation response is less than or equal to 70 ms. A local processing delay on the UE side is less than or equal to 20 ms, a transmission delay of data in the network is less than or equal to 20 ms, and a server processing delay is less than or equal to 30 ms. In this case, a game operation delay reaches a level of an expectant e-sports player, and service experience of the user is good (good).

At an ideal-experience stage (referred to as a stage 1), an end-to-end delay of an operation response is less than or equal to 50 ms. A local processing delay on the UE side is less than or equal to 10 ms, a transmission delay of data in the network is less than or equal to 15 ms, and a server processing delay is less than or equal to 25 ms. In this case, a game operation delay reaches a level of an e-sports player, and service experience of the user is excellent (excellent).

It can be learned from this that, to meet the service experience of the user, the server processing delay should be ensured.

The server processing delay is related to the load of the application server. If resources of the application server cannot support workload of the application server, a response speed of the application server decreases. Even if the application server is overloaded, the application server still works, and it takes more time to switch a context, to be specific, the response speed becomes very low. If the processing delay of the application server exceeds a specific delay limit due to overload, a request of the UE fails. Therefore, a larger throughput submitted to the application server indicates a longer response time period of the application server, and finally results in rapid deterioration.

For a delay-sensitive service, an end-to-end service delay needs to be ensured. For example, to ensure service experience of UE, a total end-to-end delay needs to be optimal. A current standard specifies how to discover, for UE, a DN closest to the UE, to provide the UE with an address of an EAS deployed in the DN. This can reduce a transmission delay of data in a network. For example, refer to FIG. 1A. An EAS 1 is deployed in an LDN 1, an EAS 2 is deployed in an LDN 2, and an EAS 3 is deployed in an LDN 3. The EAS 1 to the EAS 3 may support a same application. When the UE requests to access a specific application, an SMF selects the LDN 1 closest to the UE, an EASDF may return, to the UE, an address of the EAS 1 deployed in the LDN 1, and the UE may access, based on the address, the application supported by the EAS 1.

However, the EAS 1 selected by the SMF may not be capable of providing good quality of service for the UE.

In view of this, in embodiments of this application, selection performed by a first network element helps UE quickly access a first application, so that the UE can obtain a faster response from an EAS for the access to the application. This helps reduce a data transmission delay between the UE and the EAS that supports the application, to improve experience of accessing a service of the application by a user using the UE.

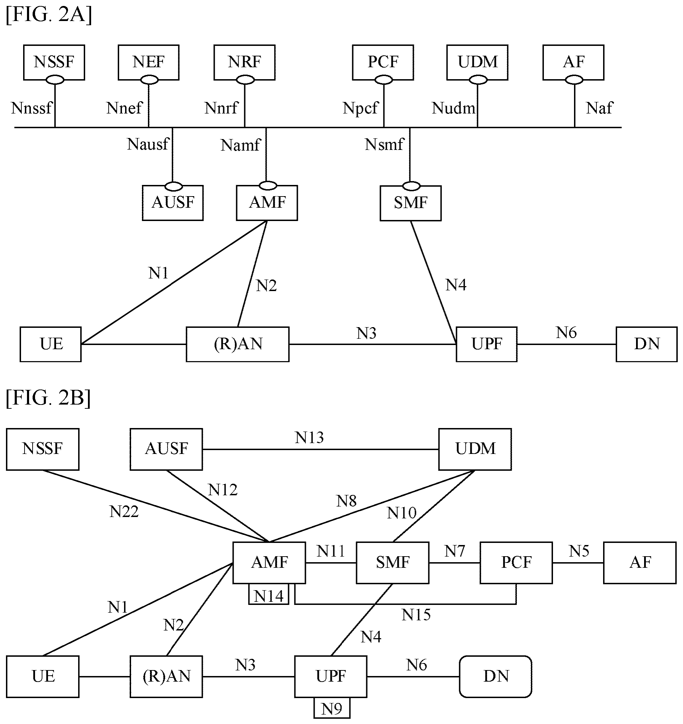

FIG. 2A is a diagram of a 5G network architecture based on a service-based architecture. The network architecture is also a network architecture to which embodiments of this application are applied. The 5G network architecture shown in FIG. 2A may include three parts: a UE part, a DN, and an operator network part.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, an SMF network element, a (radio) access network ((radio) access network, (R)AN), a user plane function (user plane function, UPF) network element, or the like.

The operator network includes the radio access network and a core network. The UE accesses the core network through the (R)AN, and the core network includes a user plane network element and a control plane network element. The user plane network element of the core network includes the UPF, and the control plane network element of the core network includes at least one of the AUSF, the AMF, the SMF, an NSSF, the NEF, the NRF, the UDM, the PCF, the AF, or the like.

The user plane network element (for example, the UPF) is mainly responsible for packet data forwarding, QoS control, charging data collection, and the like. The control plane network element is mainly responsible for service procedure interaction, and delivering a data packet forwarding policy, a QoS control policy, and the like to a user plane. In embodiments of this application, it is considered that a sensor or the like may access the core network through the UE, the (R)AN, and the like, so that a controller connected to the sensor or the like in industrial Ethernet can perform industrial data communication on the user plane through the UPF.

A control plane of the core network may use the service-based architecture, to be specific, a point-to-point communication mode in a traditional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two ends of the interface during communication.

Functions of the network elements in the core network are described as follows:

The UPF forwards a user data packet according to a routing rule of the SMF. For example, the UPF sends uplink data to the DN or another UPF, and forwards downlink data to another UPF or the (R)AN.

The AUSF performs security authentication on the UE.

The AMF performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.

The SMF performs session management on the UE, and allocates and releases a resource for a session of the UE. The resource includes session quality of service (quality of service, QoS), a session path, a forwarding rule, and the like.

The NSSF selects a network slice for the UE.

The NEF exposes a network function to a third party through a northbound application programming interface (application programming interface, API).

The NRF stores and selects network function entity information for another network element.

The UDM performs user subscription context management.

The PCF performs user policy management, and is configured to generate and manage users, sessions, and QoS flow handling policies.

The AF performs application management, is a function network element that provides various services, can interact with the core network through the NEF, and can interact with a policy management framework to perform policy management.

Related interfaces between the network element functions in embodiments of this application include:

N1: is an interface between the UE and the control plane of the core network.
N2: is a communication interface between the (R)AN and the control plane of the core network.
N3: is a communication interface between the (R)AN and the UPF, and is configured to transmit user plane data.
N4: is a communication interface between the SMF and the UPF, and is used by the SMF to perform policy configuration and the like on the UPF.
N6: is a communication port between the UPF and the DN.

FIG. 2B is a diagram of a 5G network architecture based on a point-to-point interface. The network architecture is another network architecture to which embodiments of this application are applied. For network elements in FIG. 2B, refer to descriptions of related network elements in FIG. 2A. A main difference between FIG. 2B and FIG. 2A lies in that interfaces between the network elements in FIG. 2B are point-to-point interfaces instead of service-based interfaces.

With reference to the accompanying drawings, the following describes methods provided in embodiments of this application. In embodiments of this specification, "application" and "service" may be in one-to-one correspondence. For example, one application may correspond to (or provide) one service, and a user can obtain, by accessing an application, a service provided by the application. Alternatively, "application" and "service" may be in another correspondence. This is not limited in embodiments of this application. In embodiments of this specification, "access" may mean that UE establishes a data plane link to an application (or an application server). For example, the UE may establish a PDU session to the core network, and the UE and the application may transmit a data plane packet to each other through the PDU session. For example, that UE accesses an EAS, or accesses an application supported by the EAS may be understood as: The UE has accessed the EAS, the UE is accessing the EAS, or the UE expects to access but has not accessed the EAS.

In embodiments of this application, one data network access identifier (data network access identifier, DNAI) may identify (identify) one DN or LDN, and one or more EASs exist in the DN or LDN. The UE needs to communicate with the one or more EASs through a UPF, and the UPF may be considered as a UPF corresponding to a first DNAI. Optionally, that one or more EASs exist in a DN or an LDN may mean: One or more EASs supporting a same application exist in the DN or LDN. Alternatively, that one or more EASs exist in a DN or an LDN may mean: The one or more EASs are located in the DN or LDN, and an application supported by the one or more EASs is not limited. Generally, one DN or LDN covers one specific area. Therefore, that an EAS exists in a DN or an LDN may also be understood as: An EAS exists in an area covered by a DN or an LDN. This may also be understood as: There is deployment of one or more EASs in a DN or an LDN (there is deployment of one or more EASs in a DN or an LDN). An example in which the DNAI identifies the DN is used in descriptions of the following embodiments.

Embodiments of this specification may be applied to the network architecture shown in FIG. 2A or FIG. 2B. For example, a session management function network element described in embodiments of this specification may be the SMF in FIG. 2A or FIG. 2B, a second network element described in embodiments of this specification may be the UDR in FIG. 2A or FIG. 2B, an EAS described in embodiments of this specification may be located in the DN in FIG. 2A or FIG. 2B, a network exposure function network element described in embodiments of this specification may be the NEF in FIG. 2A or FIG. 2B, and an AF described in embodiments of this specification may be the AF in FIG. 2A or FIG. 2B. In the accompanying drawings corresponding to embodiments of this application, all steps represented by dashed lines are optional steps.

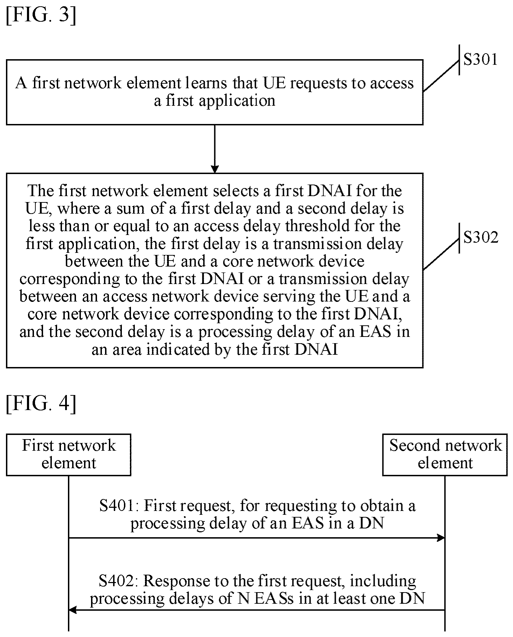

An embodiment of this application provides a first communication method. FIG. 3 is a flowchart of the method.

S301: A first network element learns that UE requests to access a first application.

The first network element is, for example, an SMF. Alternatively, the first network element may be a newly defined network element. For example, the first network element is referred to as a new (new) network function (network function, NF), or may have another name. If the first network element is a newly defined network element, the first network element may be an independent network element, and is disposed, for example, in a core network. Alternatively, the first network element may be a functional module implemented by software and/or hardware, and the functional module may be deployed in the SMF or another network element.

S302: The first network element selects a first DNAI for the UE.

A sum of a first delay and a second delay may be less than or equal to an access delay threshold for the first application. The first delay is a transmission delay between a core network device corresponding to the DNAI and the UE, or the first delay is a transmission delay between an access network device serving the UE and a core network device corresponding to the first DNAI. Optionally, the core network device is, for example, a UPF, or may be another core network device. The UPF is used as an example in embodiments of this application. The "transmission delay" may also be referred to as a "network transmission delay", and is a transmission delay of a service in a network.

For example, the first delay may be included in a transmission delay corresponding to the first DNAI. A transmission delay corresponding to a DNAI may be understood as in a case 1 or a case 2. The core network device corresponding to the first DNAI is, for example, a UPF corresponding to the first DNAI.

Case 1: A transmission delay corresponding to a DNAI is a transmission delay between the UE and the DNAI. The transmission delay between the UE and the DNAI includes, for example, a delay A, and the delay A is a transmission delay between a UPF corresponding to the DNAI and the UE. The transmission delay between the UPF and the UE is, for example, a delay in a user plane transmission path between the UPF and the UE. For example, the delay A includes a delay in a user plane transmission path of an N3 interface between the UPF corresponding to the DNAI and a RAN and a delay in a user plane transmission path of an air interface link between the RAN and the UE. The RAN serves the UE. In other words, optionally, the transmission delay corresponding to the DNAI may satisfy the following relationship:

Transmission delay corresponding to the DNAI = Transmission delay over the air interface + Transmission delay over the N3 interface (formula 1)

Optionally, in the case 1, the transmission delay between the UE and the DNAI may further include a delay B in addition to the delay A. The delay B includes, for example, a transmission delay over an N6 interface between the UPF and an EAS in a DN identified by the DNAI. In other words, the transmission delay corresponding to the DNAI may satisfy the following relationship:

Transmission delay corresponding to the DNAI = Transmission delay over the air interface + Transmission delay over the N3 interface + Transmission delay over the N6 interface
(formula 2)

Generally, in an actual scenario, if an EAS exists in a DN identified by a specific DNAI, and the DN corresponds to a UPF, a distance between the UPF and the EAS may be short. Therefore, the delay B may be ignored. That is, optionally, in the case 1, the transmission delay corresponding to the DNAI may satisfy the relationship represented by the formula 1.

If the transmission delay corresponding to the first DNAI is implemented in the case 1, the first delay is, for example, a delay A corresponding to the first DNAI, namely, the transmission delay between the UPF corresponding to the first DNAI and the UE.

Case 2: A transmission delay corresponding to a DNAI is a transmission delay between a RAN serving the UE and the DNAI. The transmission delay between the RAN and the DNAI includes, for example, a delay C, and the delay C is a delay in a user plane transmission path of an N3 interface between a UPF corresponding to the DNAI and the RAN. In other words, the transmission delay corresponding to the DNAI may satisfy the following relationship:

$$\text{Transmission delay corresponding to the DNAI} = \text{Transmission delay over the N3 interface}$$

(formula 3)

Optionally, in the case 2, the transmission delay between the RAN and the DNAI may further include a delay B in addition to the delay C. As described above, the delay B is a transmission delay over an N6 interface between the UPF and an EAS in a DN identified by the DNAI. In other words, the transmission delay corresponding to the DNAI may satisfy the following relationship:

Transmission delay corresponding to the DNAI = Transmission delay over the N3 interface + Transmission delay over the N6 interface
(formula 4)

It can be learned from the foregoing descriptions that, generally, the delay B may be ignored. That is, optionally, in the case 2, the transmission delay corresponding to the DNAI may satisfy the relationship represented by the formula 3.

If the transmission delay corresponding to the first DNAI is implemented in the case 2, the first delay is, for example, a delay C corresponding to the first DNAI, namely, a transmission delay between the UPF corresponding to the first DNAI and the RAN serving the UE.

The case 1 is used as an example. A delay in a user plane transmission path between the UE and a UPF corresponding to a DNAI may be irrelevant to an application accessed by the UE. One DNAI may correspond to one or more UPFs. In this case, a transmission delay corresponding to the DNAI may include a transmission delay between the UE and each of the one or more UPFs corresponding to the DNAI. In other words, one DNAI may correspond to one or more transmission delays. One transmission delay may include an uplink transmission delay and/or a downlink transmission delay.

For example, if a specific DNAI in the network corresponds to a UPF 1 and a UPF 2, a transmission delay corresponding to the DNAI may include one or both of the following: a transmission delay T1 between the UE and the UPF 1 (including an uplink transmission delay and/or a downlink transmission delay) or a transmission delay T2 between the UE and the UPF 2 (including an uplink transmission delay and/or a downlink transmission delay).

The second delay is a processing delay of an EAS in a DN identified by the first DNAI, and the EAS is configured to support the first application. Processing delays of different EASs may be the same or different. The processing delay of the EAS may be understood as an internal processing delay of the EAS.

It can be learned from the foregoing descriptions that, for the case 1, the transmission delay corresponding to the DNAI may further include the delay B in addition to the delay A; and for the case 2, the transmission delay corresponding to the DNAI may further include the delay B in addition to the delay C. Therefore, optionally, when selecting the DNAI, the first network element may consider the delay A or the delay C but not consider the delay B. Alternatively, when selecting the DNAI, the first network element may consider the delay A or the delay C, and also consider the delay B. For example, the first DNAI selected by the SMF may satisfy that a sum of the first delay, the second delay, and a third delay is less than or equal to the access delay threshold for the first application, where the third delay is, for example, a delay B corresponding to the first DNAI. To be specific, the third delay is a transmission delay over an N6 interface between the UPF and the EAS in the DN (for example, a first DN) identified by the first DNAI.

When selecting the DNAI for the UE, the first network element in this embodiment of this application considers both the transmission delay between the UE and the UPF corresponding to the DNAI and the processing delay of the EAS, so that the selected first DNAI is more conducive to quickly accessing the first application by the UE, and the UE can obtain a faster response from the EAS for the access to the application. This helps reduce a data transmission delay between the UE and the EAS that supports the application, to improve experience of accessing the service of the application by a user using the UE.

An embodiment of this application provides a second communication method. FIG. 4 is a flowchart of the method.

S401: A first network element sends a first request to a second network element. Correspondingly, the second network element receives the first request from the first network element. The first request may be for requesting to obtain a processing delay of an EAS in a DN.

For example, the first network element may select a DNAI for UE based on the processing delay of the EAS in the DN. However, the first network element does not store information for determining the processing delay of the EAS. In this case, the first network element may obtain the processing delay of the EAS in the DN by using the first request.

S402: The second network element sends a response to the first request to the first network element. Correspondingly, the first network element receives the response from the second network element. The response may include processing delays of N EASs in at least one DN, where N is a positive integer. The at least one DN is identified by at least one DNAI, and one DNAI may identify one DN. One or more EASs may exist in one DN, and the N EASs are, for example, a part or all of EASs that exist in the at least one DN.

For example, the first request may include the at least one DNAI. In this case, the second network element provides the first network element with the processing delay of the EAS in the at least one DN identified by the at least one DNAI. Alternatively, the first request may not include the at least one DNAI, and the second network element determines the at least one DNAI based on the first request, and provides the first network element with the processing delay of the EAS in the at least one DN identified by the at least one DNAI.

For example, the first network element learns of the processing delays of the N EASs, and may select the DNAI for the UE based on the processing delays of the N EASs. In this way, a first DNAI selected by the first network element is more conducive to quickly accessing a first application by the UE, and the UE can obtain a faster response from an EAS for the access to the application. This helps reduce a data transmission delay between the UE and the EAS that supports the application, to improve experience of accessing a service of the application by a user using the UE.

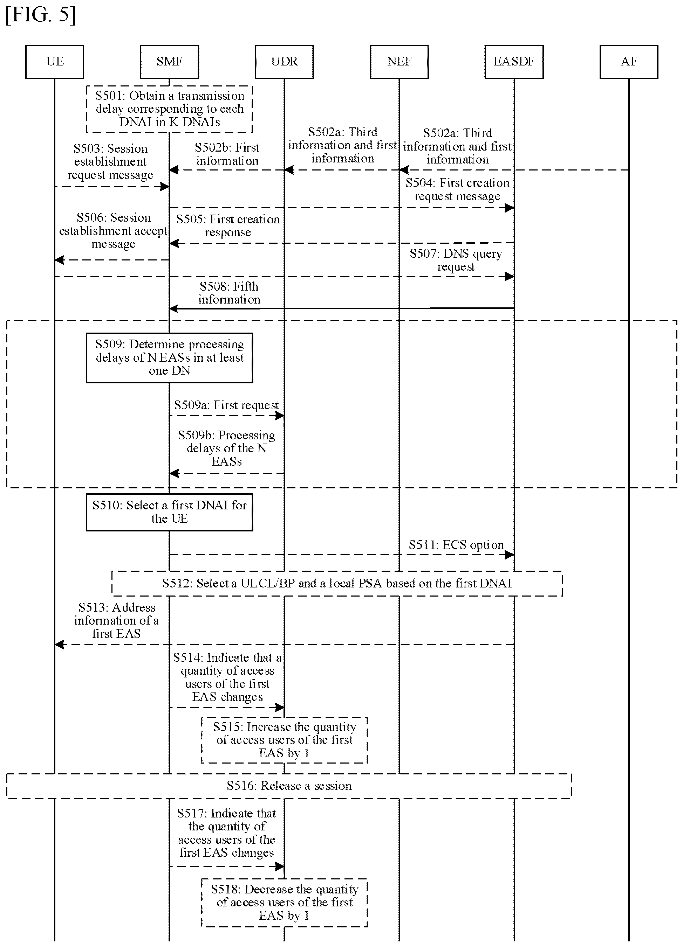

An embodiment of this application provides a third communication method. FIG. 5 is a flowchart of the method. The method may be considered as an example of the embodiment shown in FIG. 3 and the embodiment shown in FIG. 4.

S501: An SMF obtains a delay A, a delay C, or a transmission delay corresponding to each DNAI in K DNAIs (obtaining the transmission delay is used as an example in FIG. 5), where K is a positive integer. A transmission delay corresponding to a DNAI may include a delay A or a delay C corresponding to the DNAI. For this, refer to descriptions in the embodiment shown in FIG. 3.

Optionally, the SMF may obtain, by using a quality of service (quality of service, QoS) monitoring (monitoring) mechanism, the transmission delay, the delay A, or the delay C corresponding to each DNAI in the K DNAIs. In a network, a timestamp may be set for a data packet during transmission. For example, when the data packet is sent from a network element, the network element adds a sending timestamp to the data packet; and when the data packet arrives at another network element, the another network element adds an arrival timestamp to the data packet. In this way, delays in user plane transmission paths between UE (or a RAN) and UPFs corresponding to different DNAIs, namely, delays A or delays C corresponding to the different DNAIs, can be determined by using timestamps of data packets. Optionally, transmission delays over N6 interfaces between the UPFs and EASs in DNs identified by the different DNAIs may be further determined by using the timestamps of the data packets, and the SMF may determine the transmission delay corresponding to each DNAI in the K DNAIs further with reference to the delay A or the delay C.

Alternatively, a network management system may obtain the transmission delay, the delay A, or the delay C corresponding to each DNAI in the K DNAIs. The network management system may configure, for the SMF, the obtained transmission delay, delay A, or delay C corresponding to each DNAI in the K DNAIs, and the SMF may obtain the transmission delay, the delay A, or the delay C corresponding to each DNAI in the K DNAIs.

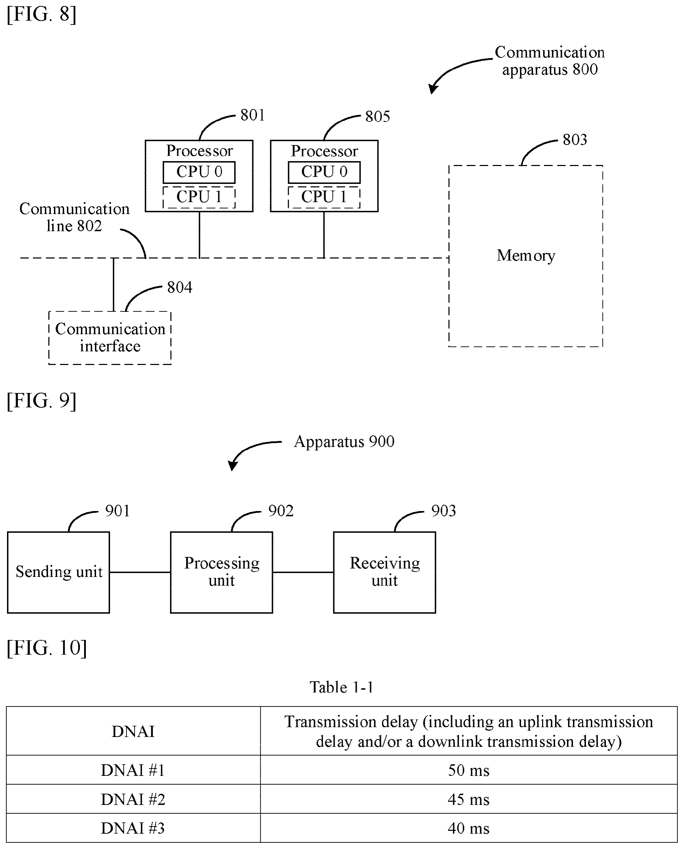

For example, if each DNAI is supported by only one UPF in the network (in other words, the DNAI corresponds to only one UPF), for a transmission delay corresponding to the DNAI, refer to Table 1-1 shown in FIG. 10. For example, the transmission delays obtained by the SMF that correspond to the K DNAIs may include one or more items in Table 1-1. One row in Table 1-1 represents a transmission delay corresponding to one DNAI. Therefore, one row in Table 1-1 is considered as one item.

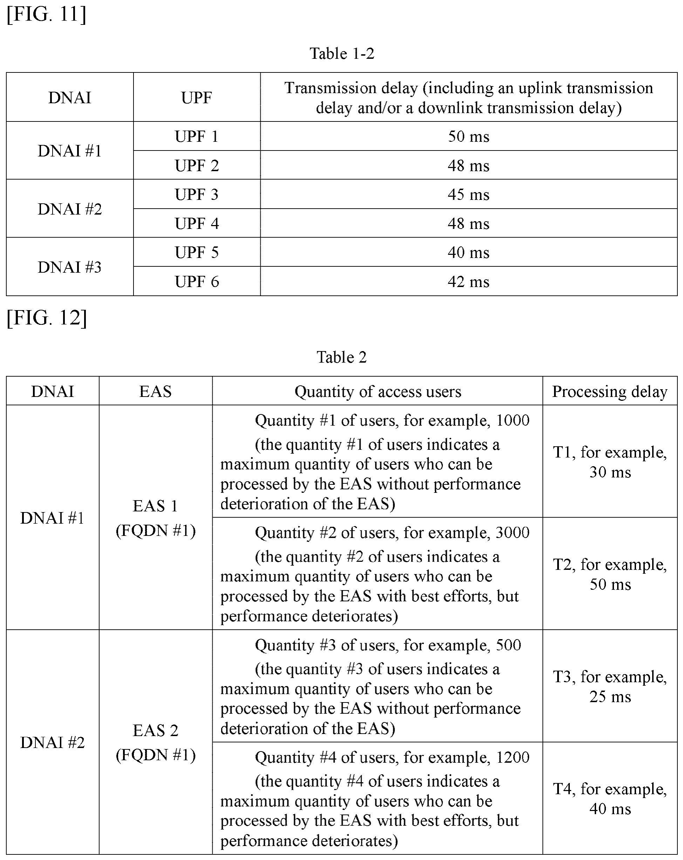

For another example, if one DNAI may be supported by a plurality of UPFs in the network (in other words, the DNAI corresponds to a plurality of UPFs), for a transmission delay corresponding to the DNAI, refer to Table 1-2 shown in FIG. 11. For example, the transmission delays obtained by the SMF that correspond to the K DNAIs may include one or more items in Table 1-2. One row in Table 1-2 represents one transmission delay corresponding to one DNAI. Therefore, one row in Table 1-2 is considered as one item.

S502a: An AF sends third information and first information to a NEF. Correspondingly, the NEF receives the third information and the first information from the AF. The NEF sends the third information and the first information to a second network element. Correspondingly, the second network element receives the third information and the first information from the NEF. An example in which the second network element is a UDR is used in this embodiment of this application. The step in which the NEF sends the third information and the first information to the UDR may also be understood as: The NEF stores the third information and the first information in the UDR. In embodiments of this application, the third information may alternatively have another name, for example, may be referred to as association information. Details are not described below.

The third information may indicate associations between load and processing delays of EASs in DNs identified by M DNAIs. Optionally, an "association between A and B" may be understood as an association relationship or a correspondence between A and B. M is a positive integer. Optionally, the third information may further indicate an application supported by an EAS. For example, the third information includes an identifier of the application supported by the EAS. Refer to Table 2 shown in FIG. 12. For example, the third information includes one or more items in Table 2. One row in Table 2 is considered as one item. A "DNAI" in Table 2 identifies a DN. For example, the DNAI is in one-to-one correspondence with the DN. A "quantity of access users" in Table 2 indicates a quantity of access users of an EAS, and may be understood as load of the EAS. An access user of an EAS may include UE that has accessed the EAS and that requests to access an application supported (or provided) by the EAS.

An FQDN in Table 2 represents a fully qualified domain name (fully qualified domain name, FQDN) of an application. For example, an identifier of an application may include an FQDN of the application. This is not limited in embodiments of this application. According to Table 2, an EAS 1 of a DNAI #1 and an EAS 2 of a DNAI #2 support an application of an FQDN #1. Quantities of users who can be accommodated by the two EASs may be different because of performance of general processing units (general process units, GPUs) or another reason. A maximum quantity of access users who can be processed by the EAS 1 of the DNAI #1 without performance deterioration is a quantity #1 of users. That is, it can be ensured that a processing delay of the EAS 1 is T1, provided that a quantity of access users of the EAS 1 is less than the quantity #1 of users. If the quantity of access users of the EAS 1 increases, the performance of the EAS 1 deteriorates. However, it can be ensured that the processing delay of the EAS 1 is T2, provided that the quantity of access users of the EAS 1 is less than a quantity #2 of users. It can be learned from Table 2 that T2 is greater than T1. In addition, the EAS 1 may further support other applications in addition to the application of the FQDN #1, and the applications are not indicated one by one in Table 2.

Similarly, a maximum quantity of access users who can be processed by the EAS 2 of the DNAI #2 without performance deterioration is a quantity #3 of users. It can be ensured that a processing delay of the EAS 2 is T3, provided that a quantity of access users of the EAS 2 is less than the quantity #3 of users. If the quantity of access users of the EAS 2 increases, the performance of the EAS 2 deteriorates. However, it can be ensured that the processing delay of the EAS 1 is T4, provided that the quantity of access users of the EAS 2 is less than a quantity #4 of users. It can be learned from Table 2 that T4 is greater than T3. In addition, the EAS 2 may further support other applications in addition to the application of the FQDN #1, and the applications are not indicated one by one in Table 2.

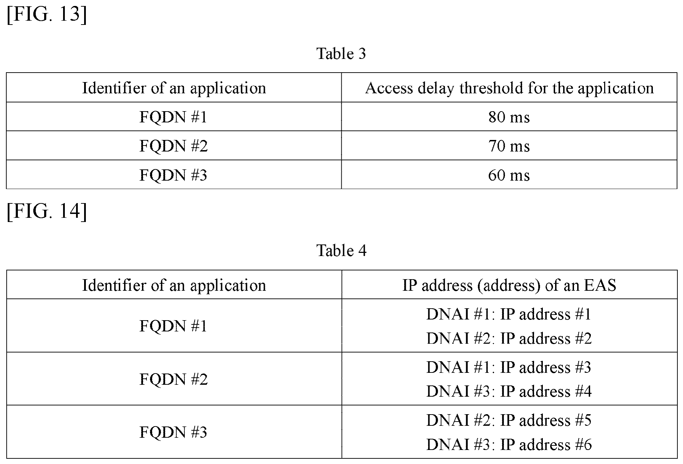

The first information may indicate an access delay threshold for a first application, where the access delay threshold may be understood as a delay requirement that needs to be met for accessing the first application. For example, the first information may indicate an access delay threshold for at least one application, and the at least one application includes the first application. An access delay threshold for an application is, for example, an end-to-end access delay threshold for the application, where "end-to-end" refers to a UE end to an EAS end that supports (or provides) the application. That is, an access delay threshold for an application may be a threshold that needs to be met by a delay between UE accessing the application and an EAS supporting the application. When the UE accesses a specific application supported by a specific EAS, if a delay between the UE and the EAS is less than or equal to an access delay threshold for the application, the UE can obtain good quality of service. Therefore, an application mode of an access delay threshold for an application is: A sum of a transmission delay corresponding to a DNAI (or a delay A or a delay C corresponding to the DNAI) and a processing delay of an EAS that supports the application and that is in a DN identified by the DNAI may be less than or equal to the access delay threshold for the application. Optionally, in this embodiment of this application, it is considered that all EASs in a DN identified by a DNAI can support a same application. For example, refer to Table 3 shown in FIG. 13. The first information may include one or more items in Table 3. One row in Table 3 represents an access delay threshold for one application. Therefore, one row in Table 3 is considered as one item.

S502b: The UDR sends the first information to the SMF. Correspondingly, the SMF receives the first information from the UDR.

S503: The UE sends a session establishment request message to the SMF. Correspondingly, the SMF receives the session establishment request message from the UE. The session establishment request message may be used by the UE to establish a session to the SMF, and the session is, for example, a protocol data unit (protocol data unit, PDU) session. For example, if the UE requests to access the first application, the UE may request to establish the PDU session to the SMF, to transmit data corresponding to the first application.

S504: The SMF sends a first creation request message to an EASDF. Correspondingly, the EASDF receives the first creation request message from the SMF.

After receiving the session establishment request message, the SMF may select the EASDF, and may send the first creation request message to the EASDF. For example, for the network architecture shown in FIG. 2A, the SMF may invoke a service-based operation of the EASDF to implement the first creation request message. The service-based operation is, for example, referred to as a first service-based operation. The first service-based operation may be used by the SMF to send a request to the EASDF. The first service-based operation may include a DNS handling rule (DNS handling rule), and the DNS handling rule includes, for example, a context of the UE. Correspondingly, the EASDF may receive the first service-based operation. For example, the first service-based operation is Neasdf_DNSContext_Create_Request.

S505: The EASDF sends a first creation response to the SMF. Correspondingly, the SMF receives the first creation response from the EASDF.

After receiving the first creation request message, the EASDF may send the first creation response to the SMF. For example, for the network architecture shown in FIG. 2A, the EASDF may invoke a service-based operation of the EASDF to implement the first creation response. The service-based operation is, for example, referred to as a second service-based operation. The second service-based operation may be used by the EASDF to send a response to the SMF. For example, the second service-based operation may be a response to the first service-based operation. For example, the second service-based operation is Neasdf_DNSContext_Create_response.

S506: The SMF sends a session establishment accept message to the UE. Correspondingly, the UE receives the session establishment accept message from the SMF.

After receiving the first creation response, the SMF may send the session establishment accept message to the UE. The session establishment accept message may indicate that the PDU session is successfully established. The session establishment accept message may include address information of a DNS server. For example, the address information of the DNS server included in the session establishment accept message is address information of the EASDF.

S507: The UE sends a DNS query (query) request to the EASDF. Correspondingly, the EASDF receives the DNS query request from the UE.

For example, the UE may send the DNS query request to the EASDF based on the address information of the EASDF. The DNS query request may include an identifier of the first application.

S508: The EASDF sends fifth information to a first network element. Correspondingly, the first network element receives the fifth information from the EASDF. In this embodiment of this application, the first network element is, for example, the SMF, and the SMF is used as an example below.

The fifth information may indicate an application that the UE requests to access, so that the SMF may determine, based on the fifth information, the application that the UE requests to access. For example, the fifth information includes the identifier of the first application, to indicate that the UE requests to access the first application. The SMF may determine, based on the identifier of the first application, that the UE requests to access the first application. For example, the identifier of the first application is an FQDN of the first application. For example, after receiving the DNS query request, the EASDF may determine, based on the identifier of the first application and the DNS handling rule, whether to send the identifier of the first application to the SMF. An example in which the EASDF sends the identifier of the first application to the SMF is used in this embodiment of this application.

Using the network architecture shown in FIG. 2A as an example, the EASDF may invoke a service-based operation of the EASDF to send the fifth information. The service-based operation is, for example, referred to as a third service-based operation, and the third service-based operation may be used by the EASDF to send a request to the SMF. The third service-based operation may include the first information. Correspondingly, the SMF may receive the third service-based operation. For example, the third service-based operation is Neasdf_DNSContext_Notify_Request.

After receiving the fifth information, the SMF may learn that the UE requests to access the first application. Therefore, S508 and S301 in the embodiment shown in FIG. 3 are, for example, a same step. Alternatively, S508 is an optional implementation of S301.

After learning that the UE requests to access the first application, the SMF may select a DNAI for the first application (or the UE).

S509: The SMF determines processing delays of N EASs in at least one DN, where N is a positive integer. The at least one DN is identified by at least one DNAI. One DNAI may identify one DN, and the at least one DNAI may identify the at least one DN. One or more EASs may exist in a DN, and the N EASs are, for example, all or a part of EASs in the at least one DN.

The SMF may determine, based on a location of the UE, a DNAI that can be accessed by the UE (where accessing a DNAI by the UE may be understood as accessing, by the UE, an application supported by an EAS in a DN identified by the DNAI). For example, the SMF determines, based on the location of the UE, a DNAI list that can be accessed by the UE, and the DNAI list includes at least one DNAI, in other words, the at least one DNAI is the DNAI that can be accessed by the UE. The at least one DNAI may include all or a part of the K DNAIs in S501. One or more EASs may exist in a DN identified by any DNAI in the at least one DNAI, and quantities of EASs that exist in DNs identified by different DNAIs may be the same or different.

Optionally, when determining the at least one DNAI, the SMF may consider both the location of the UE and whether an EAS in a DN identified by a DNAI supports the first application. For example, the SMF determines that the UE can access a plurality of DNAIs, and the SMF determines, from the plurality of DNAIs, a DNAI that identifies a DN in which an EAS supports the first application, for example, the at least one DNAI. Alternatively, the SMF determines that EASs in DNs identified by the plurality of DNAIs all support the first application. In this case, the SMF determines, from the plurality of DNAIs based on the location of the UE, the DNAI that can be accessed by the UE, for example, the at least one DNAI. In this embodiment of this application, EASs in a DN identified by each DNAI in the at least one DNAI can support, for example, a same application.

After determining the at least one DNAI, the SMF may further determine the processing delay of the EAS in the at least one DN identified by the at least one DNAI, to determine which DNAI is to be selected for the UE. Optionally, the SMF may obtain the processing delays of the N EASs in the at least one DN from the UDR. For example, S509 may include S509a and S509b.

S509a: The SMF sends a first request to the UDR. Correspondingly, the UDR receives the first request from the SMF.

The first request may be for requesting to obtain a processing delay of an EAS in a DN. Optionally, the first request may include one or more of the following: an identifier of the UE, the identifier of the first application, or the at least one DNAI. For example, the identifier of the UE may include a subscription permanent identifier (subscription permanent identifier, SUPI) of the UE. For example, the first request includes the identifier of the UE, and the UDR may query, based on the identifier of the UE, an application corresponding to the UE. The application corresponding to the UE includes, for example, an application historically accessed by the UE or an application that is in a binding relationship with the UE. For example, if the UDR determines, through query, that the UE corresponds to one or more applications, processing delays of EASs that support the one or more applications may be separately determined. In this case, the UDR may determine a processing delay of a part or all of EASs in the at least one DN, and may further determine a processing delay of an EAS in a DN other than the at least one DN.

Alternatively, the first request includes the identifier of the first application, and the UDR may determine a processing delay of an EAS that supports the first application. In this case, the UDR may determine a processing delay of a part or all of EASs in the at least one DN, and may further determine a processing delay of an EAS in a DN other than the at least one DN.

Alternatively, the first request includes the at least one DNAI, and the UDR may directly determine a processing delay of a part or all of EASs in the at least one DN.

Alternatively, the first request includes the identifier of the UE and the at least one DNAI, and the UDR may query, based on the identifier of the UE, one or more applications corresponding to the UE, and determine EASs that support the one or more applications. Further, the UDR selects an EAS in the at least one DN from these EASs. The UDR selects, for example, a part or all of EASs in the at least one DN. The UDR may determine a processing delay of the selected EAS.

Alternatively, the first request includes the identifier of the first application and the at least one DNAI, and the UDR may determine EASs that support the first application, and select an EAS in the at least one DN from these EASs. The UDR selects, for example, a part or all of EASs in the at least one DN. The UDR may determine a processing delay of the selected EAS.

It can be learned that if the first request includes the at least one DNAI, it can be ensured that a DNAI queried by the UDR is a DNAI that can be accessed by the UE, so that validity of information obtained by the SMF can be improved, and a query range of the UDR can be narrowed. If the first request does not include the at least one DNAI, overheads of transmission between the SMF and the UDR can be reduced.

S509a and S401 in the embodiment shown in FIG. 4 are, for example, a same step. Alternatively, S509a is an optional implementation of S401.

S509b: The UDR sends a response to the first request to the SMF. Correspondingly, the SMF receives the response from the UDR. The response may include the processing delays of the N EASs in the at least one DN.

The UDR may store the third information. For a manner in which the UDR obtains the third information, content of the third information, and the like, refer to S502a. The UDR may determine the processing delays of the N EASs in the at least one DN based on the third information and fourth information. In embodiments of this application, the fourth information may alternatively have another name, for example, user information. Details are not described below. The fourth information may include quantities of access users of the N EASs. It may be understood that the fourth information includes the quantities of access users of the N EASs, and the third information indicates an association between load of an EAS (for example, a quantity of access users of the EAS) and a processing delay of the EAS, so that the UDR can determine, from the third information, a processing delay corresponding to the fourth information.

As described above, one or more EASs may exist in a DN. An example in which EASs in a DN can support a same application is used in this embodiment of this application. In addition, an example in which performance of EASs in a DN is the same or similar is also used in this embodiment of this application. Therefore, in this embodiment of this application, a processing delay of an EAS in a DN may include a processing delay of any EAS in the DN. Alternatively, in this embodiment of this application, because it is considered that processing delays of all EASs in a DN are equal, it may also be considered that a processing delay of an EAS in a DN may include processing delays of all EASs in the DN, but the processing delays of all the EASs are equal. For example, if the at least one DN includes a second DN, and the second DN includes E EASs, processing delays of the E EASs in the second DN may include a processing delay of any EAS in the E EASs, or may include the processing delays of all the E EASs, but the processing delays of the E EASs may be equal. E is a positive integer less than or equal to N, and the second DN may be any DN in the at least one DN. In this case, the processing delays that are of the N EASs in the at least one DN and that are determined by the UDR may include a processing delay of a part of the N EASs. The part of the EASs may be in one-to-one correspondence with the at least one DN. For example, a quantity of EASs in the part of the EASs is equal to a quantity of the at least one DNAI. A correspondence between an EAS and a DN is, for example, the DN includes the EAS. Alternatively, the processing delays that are of the N EASs in the at least one DN and that are determined by the UDR may include the processing delays of all the N EASs, but the processing delays of all the EASs may be equal.

For example, the quantity of the at least one DNAI is 3, the three DNAIs identify three DNs, and seven EASs exist in the three DNs (for example, an EAS 1 and an EAS 2 exist in a DN identified by a DNAI #1, an EAS 3, an EAS 4, and an EAS 5 exist in a DN identified by a DNAI #2, and an EAS 6 and an EAS 7 exist in a DN identified by a DNAI #3). In this case, processing delays of the seven EASs in the three DNs may include processing delays of three EASs in the seven EASs, and the three EASs are in one-to-one correspondence with the three DNAIs. For example, the three EASs are respectively the EAS 1, the EAS 4, and the EAS 6. Alternatively, processing delays of the seven EASs in the three DNs may include the processing delays of the seven EASs, but processing delays of the EAS 1 and the EAS 2 are equal, processing delays of the EAS 3, the EAS 4, and the EAS 5 are equal, and processing delays of the EAS 6 and the EAS 7 are equal. For the UDR, if a plurality of EASs exist in a DN identified by a specific DNAI, the UDR only needs to determine a processing delay of any EAS in the plurality of EASs. This helps simplify a determining process of the UDR.

For example, the identifier of the first application included in the first request in S509a is the FQDN #1, the first request includes a DNAI list (list), the DNAI list includes at least one DNAI, and the at least one DNAI includes the DNAI #1 and the DNAI #2. According to Table 2, the EAS 1 in a DN identified by the DNAI #1 and the EAS 2 in a DN identified by the DNAI #2 support the first application. In this case, the UDR may determine load of the EAS 1 and the EAS 2, that is, determine the quantity of access users of the EAS 1 and the quantity of access users of the EAS 2. Optionally, the UDR may adjust a quantity of access users of a corresponding EAS based on an increase or a decrease of the quantity of access users. Therefore, a quantity that is of access users of an EAS and that is determined by the UDR is a quantity of users who have accessed the EAS currently. A process of adjusting the quantity of access users of the EAS by the UDR is described below.

If the UDR determines the quantity of access users of the EAS 1 and the quantity of access users of the EAS 2, the UDR may determine the processing delay of the EAS 1 and the processing delay of the EAS 1 with reference to the third information. For example, the UDR determines that the quantity of access users of the EAS 1 is 400 (the UE has not been counted in this case). It can be learned from Table 2 that the quantity of access users of the EAS 1 is less than the quantity #1 of users in Table 2, it indicates that the performance of the EAS 1 does not deteriorate, and the processing delay of the EAS 1 is T1 (20 ms). For another example, the UDR determines that the quantity of access users of the EAS 2 is 700 (the UE has not been counted in this case). It can be learned from Table 2 that the quantity of access users of the EAS 1 is greater than the quantity #3 of users in Table 2 and less than the quantity #4 of users in Table 2, it indicates that the performance of the EAS 2 has deteriorated, and the processing delay of the EAS 2 is T4 (40 ms).

After the processing delays of the N EASs are determined, S509b may be performed, and the UDR may indicate the processing delays of the N EASs to the SMF. Still using the foregoing example, the response in S509b may indicate that the processing delay of the EAS 1 is 20 ms, and indicate that the processing delay of the EAS 2 is 40 ms.

S509b and S402 in the embodiment shown in FIG. 4 are, for example, a same step. Alternatively, S509b is an optional implementation of S402.

S510: The SMF selects a first DNAI for the UE, where an EAS in a DN identified by the first DNAI supports the first application. For example, the SMF selects the first DNAI from the at least one DNAI, and the UE may access the first application supported by the EAS in the DN identified by the first DNAI, to obtain a service corresponding to the first application. A sum of a first delay and a second delay may be less than or equal to the access delay threshold for the first application. Alternatively, optionally, a sum of a first delay, a second delay, and a third delay may be less than or equal to the access delay threshold for the first application. S510 and S302 in the embodiment shown in FIG. 3 are, for example, a same step, or S510 is an optional implementation of S302. Therefore, for descriptions of concepts such as the first delay, the second delay, and the third delay, refer to S302.

Optionally, in S510, the SMF may select the first DNAI for the UE from the at least one DNAI based on the processing delays of the N EASs, a delay A, a delay C, or a transmission delay corresponding to the at least one DNAI, and the access delay threshold for the first application.

In S501, the SMF obtains the delay A, the delay C, or the transmission delay corresponding to each DNAI in the K DNAIs. For example, the K DNAIs include the at least one DNAI. In S502b, the SMF obtains the third information, that is, obtains the access delay threshold for the first application. In S509, the SMF determines the processing delays of the N EASs. In conclusion, the SMF may select a DNAI for the UE from the at least one DNAI based on the processing delays of the N EASs, the delay A, the delay C, or the transmission delay corresponding to the at least one DNAI, and the access delay threshold for the first application. The selected DNAI may be referred to as a selected DNAI (selected DNAI). For example, if the SMF selects the first DNAI, the first DNAI may be referred to as the selected DNAI. For example, the SMF may determine a sum of a delay A, a delay C, or a transmission delay corresponding to each DNAI in the at least one DNAI and a processing delay of any EAS in a DN identified by the DNAI, and at least one sum value may be determined in total. The SMF may determine, from the at least one sum value, a sum value that is less than or equal to the access delay threshold for the first application, and determine a DNAI corresponding to the sum value as the first DNAI. Optionally, the sum value corresponding to the first DNAI is not only less than the access delay threshold for the first application, but also may be a smallest value in the at least one sum value. A smaller sum value indicates a shorter delay between the UE and an EAS, and better quality of service is obtained by the UE, so that a better DNAI can be selected for the UE.

Optionally, the SMF may first determine the DNAI based on the delay A or the delay C corresponding to the DNAI, and whether to use the delay A or the delay C may be preconfigured, predefined in a protocol, or autonomously determined by the SMF. For example, if the SMF determines at least one sum value based on the delay A or the delay C corresponding to the DNAI, the SMF may determine a first sum value from the at least one sum value. For example, the first sum value is a smallest value in the at least one sum value, and the first sum value corresponds to the first DNAI. If the first sum value is less than or equal to the access delay threshold for the first application, the SMF may further determine a sum value of the first sum value and the third delay. For example, the sum value is referred to as a sum value A. If the sum value A is also less than or equal to the access delay threshold for the first application, the SMF may finally select the first DNAI for the UE. If the sum value A is greater than the access delay threshold for the first application, the SMF may not select the first DNAI for the UE. In this case, it is considered that the DNAI selection fails. Alternatively, if the first sum value is greater than the access delay threshold for the first application (because the first sum value is the smallest value in the at least one sum value, the at least one sum value is all greater than the access delay threshold for the first application), the SMF may not need to determine a sum value of the first sum value and the third delay, and does not select the first DNAI for the UE. In this case, it is considered that the DNAI selection fails.

Alternatively, whether the SMF selects the DNAI based on the delay A, the delay C, or the transmission delay corresponding to the DNAI may be preconfigured, predefined in a protocol, or autonomously determined by the SMF. For example, if it is preconfigured to select the DNAI based on the transmission delay corresponding to the DNAI, the SMF may select a DNAI for the UE from the at least one DNAI based on the processing delays of the N EASs, the transmission delay corresponding to the at least one DNAI, and the access delay threshold for the first application. For another example, if it is preconfigured in the SMF to select the DNAI based on the delay A corresponding to the DNAI, the SMF may select a DNAI for the UE from the at least one DNAI based on the processing delays of the N EASs, the delay A corresponding to the at least one DNAI, and the access delay threshold for the first application, without considering a delay B corresponding to the DNAI.

For example, the SMF selects the DNAI based on the transmission delay corresponding to the DNAI. For example, the first application that the UE requests to access is the FQDN #1; and according to Table 3, the access delay threshold for the first application is 80 ms. The SMF determines that DNAIs that can be accessed by the UE in a current location of the UE include the DNAI #1 and the DNAI #2, and the SMF may determine a transmission delay for the DNAI #1 and a transmission delay for the DNAI #2 according to S501. For example, according to Table 1-1, the transmission delay for the DNAI #1 is 50 ms, and the transmission delay for the DNAI #2 is 45 ms. The SMF may determine, based on the response from the UDR in S509b, a processing delay of an EAS in the DN identified by the DNAI #1 and a processing delay of an EAS in the DN identified by the DNAI #2. For example, the processing delay of the EAS 1 is 20 ms, and the processing delay of the EAS 2 is 40 ms. The SMF may determine the selected DNAI based on the foregoing information. For example, a sum of the transmission delay for the DNAI #1 and the processing delay of the EAS 1 is 70 ms, a sum of the transmission delay for the DNAI #2 and the processing delay of the EAS 2 is 85 ms, and the access delay threshold for the first application is 80 ms. The SMF may determine that the DNAI #1 can meet the access delay threshold for the first application and the DNAI #2 cannot meet the access delay threshold for the first application. Therefore, the SMF may determine the DNAI #1 as the selected DNAI.

As described above, the at least one sum value determined by the SMF may be all greater than the access delay threshold for the first application, or the sum value of the first sum value corresponding to the first DNAI and the third delay may be greater than the access delay threshold for the first application. In this case, none of the at least one DNAI meets the access delay threshold for the first application, and the SMF may not select the DNAI for the UE. In other words, a DNAI selection process fails, and the access of the UE also fails. Alternatively, the SMF may select a DNAI for the UE from the at least one DNAI. For example, the SMF selects a DNAI corresponding to the first sum value. Although the DNAI cannot meet the access delay threshold for the first application, an access success rate of the UE can be improved as much as possible.

Optionally, an end-to-end delay between the UE and an EAS in a DN identified by a DNAI may further include a response time period of a UPF in addition to a transmission delay corresponding to the DNAI and a processing delay of the EAS. In embodiments of this application, it is assumed that the response time period of the UPF remains unchanged, and response time periods of different UPFs are the same or slightly differ. Therefore, the response time period of the UPF may be ignored during the DNAI selection.

In this case, because the SMF in this embodiment of this application considers both the transmission delay corresponding to the DNAI and the processing delay of the EAS during the DNAI selection, a delay between the DNAI selected by the SMF and the UE can be reduced, so that a faster response can be obtained for the access of the UE, the UE obtains good quality of service, and service experience of a user using the UE is improved.

S511: The SMF sends an extension mechanisms for DNS client subnet (extension mechanisms for DNS client subnet, ECS) option (option) to the EASDF. Correspondingly, the EASDF receives the ECS option from the SMF.

Using the network architecture shown in FIG. 2A as an example, the SMF may invoke a service-based operation of the EASDF to send the EAS option. The service-based operation is, for example, referred to as a fourth service-based operation. The fourth service-based operation may be used by the SMF to send a response to the EASDF. For example, the fourth service-based operation may be a response to the third service-based operation in S508. The fourth service-based operation may include the ECS option. Correspondingly, the EASDF may receive the fourth service-based operation. For example, the fourth service-based operation is Neasdf_DNSContext_Notify_Response.

The SMF expects to send the first DNAI to the DNS server through the EASDF, but the DNS server may not be capable of identifying the first DNAI. Therefore, the SMF may determine the ECS option based on the first DNAI, where the ECS option may indicate the first DNAI, and the ECS option can be identified by the DNS server.

After receiving the ECS option, the EASDF may add the ECS option to a DNS query (query) message, and send the DNS query message to the DNS server. After receiving the ECS option, the DNS server may determine a specific EAS in EASs in the DN identified by the first DNAI. For example, if the DNS server determines a first EAS, the DNS server may send address information of the first EAS, for example, an Internet protocol (Internet protocol, IP) address of the first EAS, to the EASDF. In this embodiment of this application, all EASs in a DN identified by a DNAI support a same application, and performance of all EASs in a DN identified by a DNAI is the same or similar. Therefore, the first EAS selected by the DNS server can meet the access delay threshold for the first application. That is, a sum of the first delay and a second delay may be less than or equal to the access delay threshold for the first application. Alternatively, optionally, a sum of the first delay, a second delay, and a third delay may be less than or equal to the access delay threshold for the first application.

S512: The SMF selects an uplink classifier (uplink classifier, ULCL)/branching point (branching point, BP) and a local (local) PDU session anchor (PDU session anchor, PSA) based on the first DNAI. For example, S512 occurs before S511, or occurs after S511. This is not limited.

The SMF selects the ULCL or the BP based on the first DNAI. In this way, when the UE subsequently accesses an EAS in the DN identified by the first DNAI, it can be ensured that a sum of the transmission delay corresponding to the first DNAI and a processing delay of the EAS is optimal.

S513: The EASDF sends the address information of the first EAS to the UE. Correspondingly, the UE receives the address information from the EASDF.

For example, if the EASDF determines the first EAS in the DN identified by the first DNAI, the EASDF may send a DNS response (response) to the UE, where the DNS response may include the address information, for example, the IP address, of the first EAS. S513 may occur before S512, or occur after S512. This is not limited.

Optionally, the EASDF may further send the address information of the first EAS to the SMF. In this case, the SMF may receive the address information of the first EAS. This step may occur after S511. In addition, for example, this step occurs before S513, occurs after S513, or occurs at the same time with S513.

Through the foregoing process, a quantity of access users of the first EAS increases (that is, the UE is added). To enable the UDR to more accurately determine a processing delay of the first EAS, the method may further include S514 and S515.

S514: The SMF sends a second request to the UDR. Correspondingly, the UDR receives the second request from the SMF.

The second request may indicate that the quantity of access users of the first EAS in the DN identified by the first DNAI changes. Therefore, S514 may also be understood as: The SMF notifies the UDR that the quantity of access users of the first EAS in the DN identified by the first DNAI changes. The change may be an increase or a decrease. In S514, the change is an increase. Therefore, the second request may specifically indicate that the quantity of access users of the first EAS in the DN identified by the first DNAI increases. Alternatively, the second request may indicate the UDR to increase the quantity of access users of the first EAS in the DN identified by the first DNAI. For example, the second request may include first indication information, and the first indication information indicates the UDR to increase the quantity of access users of the first EAS in the DN identified by the first DNAI, or indicates that the quantity of access users of the first EAS in the DN identified by the first DNAI increases. Optionally, the second request may further include the address information of the first

EP 4 664 861 A1

EAS and the first DNAI, so that the UDR learns that the second request is specific to the first EAS in the DN identified by the first DNAI. Optionally, the second request may further include the identifier of the UE and/or the identifier of the first application. For example, the identifier of the UE may include the SUPI of the UE, and the identifier of the first application may include the FQDN corresponding to the first application.

S515: The UDR updates the quantity of access users of the first EAS. For example, in S515, the UDR may increase the quantity of access users of the first EAS by 1.

A quantity of access users of the first EAS by which the UDR needs to increase is related to, for example, a quantity of UE identifiers included in the second request. For example, if the second request includes C1 UE identifiers, the UDR may increase the quantity of access users of the first EAS by C1. An example in which C1=1 is used in this embodiment of this application. For example, the first DNAI is the DNAI #1, and the first EAS is the EAS 1 in the DN identified by the DNAI #1. In the example in S509b, the UDR determines that the quantity of access users of the EAS 1 is 400. In this case, the UDR updates the quantity that is of access users of the EAS 1 and that is recorded by the UDR to 401 by performing S515.

Alternatively, the second request may not include the identifier of the UE. In this case, the UDR may increase the quantity of access users of the first EAS by 1 by default.

It can be learned from the foregoing that the second request may indicate that the quantity of access users of the first EAS in the DN identified by the first DNAI changes, and a change manner may be an increase or a decrease. For example, if a session between the UE and the SMF is released, the UE is disconnected from the EAS, and the quantity of access users of the first EAS decreases. Therefore, optionally, the method may further include S516 to S518.

S516: The SMF releases the session between the SMF and the UE. The session is, for example, the session established through steps S503, S506, and the like. After the session is released, the UE is disconnected from the first EAS.

S517: The SMF sends a third request to the UDR. Correspondingly, the UDR receives the third request from the SMF.

The third request may indicate that the quantity of access users of the first EAS in the DN identified by the first DNAI changes. Therefore, S517 may also be understood as: The SMF notifies the UDR that the quantity of access users of the first EAS in the DN identified by the first DNAI changes. The change may be an increase or a decrease. In S517, the change is a decrease. Therefore, the third request may specifically indicate that the quantity of access users of the first EAS in the DN identified by the first DNAI decreases. Alternatively, the third request may indicate the UDR to decrease the quantity of access users of the first EAS in the DN identified by the first DNAI. For example, the third request may include second indication information, and the second indication information indicates that the quantity of access users of the first EAS in the DN identified by the first DNAI decreases, or indicates the UDR to decrease the quantity of access users of the first EAS in the DN identified by the first DNAI. Optionally, the third request may include the address information of the first EAS and the first DNAI, so that the UDR learns that the third request is specific to the first EAS in the DN identified by the first DNAI. Optionally, the third request may further include the identifier of the UE and/or the identifier of the first application.

S518: The UDR updates the quantity of access users of the first EAS. For example, in S518, the UDR may decrease the quantity of access users of the first EAS by 1.

A quantity of access users of the first EAS by which the UDR needs to decrease is related to, for example, a quantity of UE identifiers included in the third request. For example, if the third request includes C2 UE identifiers, the UDR may decrease the quantity of access users of the first EAS by C2. An example in which C2=1 is used in this embodiment of this application. For example, the first DNAI is the DNAI #1, and the first EAS is the EAS 1 in the DN identified by the DNAI #1. In the example in S509b, the UDR determines that the quantity of access users of the EAS 1 is 400. The UDR updates the quantity that is of access users of the EAS 1 and that is recorded by the UDR to 401 by performing S515, and then updates the quantity that is of access users of the EAS 1 and that is recorded by the UDR to 400 by performing S518.

Alternatively, the third request may not include the identifier of the UE. In this case, the UDR may decrease the quantity of access users of the first EAS by 1 by default.

According to the solution in this embodiment of this application, the sum of the first delay and the second delay may be less than or equal to the access delay threshold for the first application (or the sum of the first delay, the second delay, and the third delay is less than or equal to the access delay threshold for the first application). This is equivalent to considering both the transmission delay corresponding to the DNAI and the processing delay of the EAS during the DNAI selection, so that the selected first DNAI is more conducive to quickly accessing the first application by the UE, and the UE can obtain a faster response from the EAS for the access to the application. This helps reduce a data transmission delay between the UE and the EAS that supports the application, to improve experience of accessing the service of the application by the user using the UE.

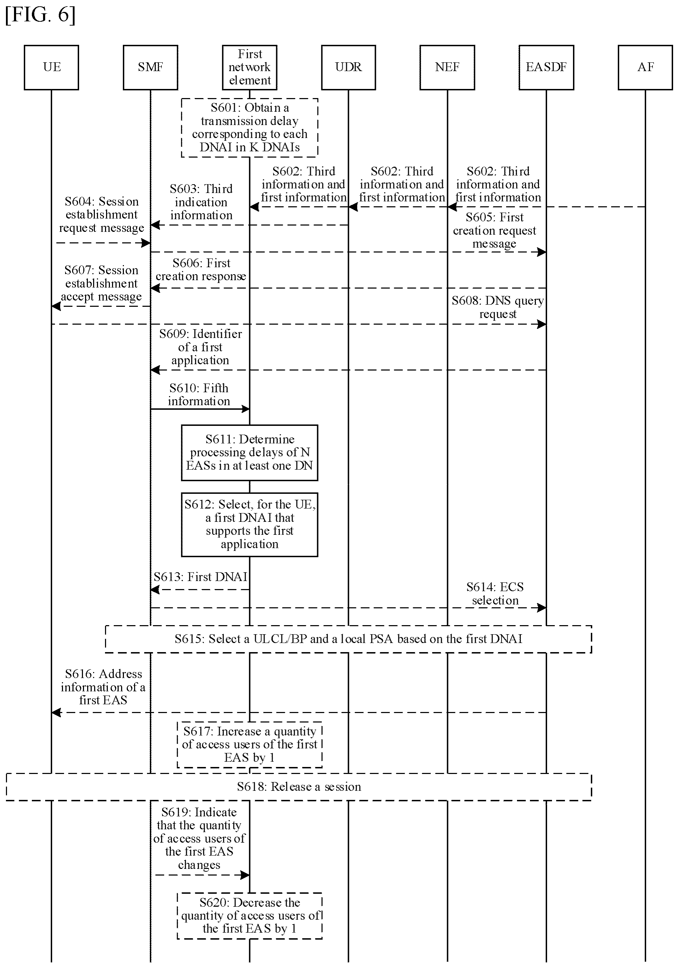

The following describes a fourth communication method provided in an embodiment of this application. FIG. 6 is a flowchart of the method. The method may be considered as an example of the embodiment shown in FIG. 3.

S601: A first network element obtains a delay A, a delay C, or a transmission delay corresponding to each DNAI in K DNAIs (obtaining the transmission delay is used as an example in FIG. 6), where K is a positive integer.

In this embodiment of this application, the first network element is, for example, a newly defined network element. For descriptions of this, refer to the embodiment shown in FIG. 3. If the first network element is a functional module deployed in an SMF, a communication process between the first network element and the SMF may not be performed in this embodiment of this application.

For a process in which the first network element obtains the delay A, the delay C, or the transmission delay corresponding to each DNAI in the K DNAIs, understanding of the transmission delay corresponding to the DNAI, and the like, refer to descriptions of S501 in the embodiment shown in FIG. 5.

S602: An AF sends third information and first information to a NEF. Correspondingly, the NEF receives the third information and the first information from the AF. The NEF sends the third information and the first information to a second network element. Correspondingly, the second network element receives the third information and the first information from the NEF. The second network element sends the third information and the first information to the first network element. Correspondingly, the first network element receives the third information and the first information from the second network element. An example in which the second network element is a UDR is used in this embodiment of this application. The step in which the NEF sends the third information and the first information to the UDR may also be understood as: The NEF stores the third information and the first information in the UDR.

Optionally, the first network element may subscribe to EAS deployment information from the UDR in advance. If the UDR receives the third information and/or the first information from the NEF after receiving subscription information from the first network element, the UDR may send the third information and/or the first information to the first network element. For more descriptions of S602, for example, content of the third information and the first information, refer to S502a and S502b in the embodiment shown in FIG. 5.

S603: The UDR sends third indication information to the SMF. Correspondingly, the SMF receives the third indication information from the UDR.

The third indication information may indicate which applications correspond to access delay thresholds. For example, an application corresponding to a delay-sensitive service generally corresponds to an access delay threshold, and an application corresponding to a non-delay-sensitive service may correspond to an access delay threshold, or may not correspond to an access delay threshold. For an application corresponding to no access delay threshold, it may be considered that an access delay for the application is not limited. Therefore, the UDR may indicate, to the SMF, which applications correspond to access delay thresholds. If UE requests to access these applications, the SMF may perform the solution in this embodiment of this application. If UE requests to access an application corresponding to no access delay threshold (for example, an application that is not indicated by the third indication information), the SMF may not perform the solution in this embodiment of this application. For example, the SMF may select a DNAI for the UE based on a location of the UE.

The third indication information is, for example, the first information. To be specific, the third indication information may include an identifier of an application and an access delay threshold. Alternatively, this is understood as: The third indication information includes a correspondence between an identifier of an application and an access delay threshold. Alternatively, because the SMF does not need to decide which DNAI is to be selected for the UE, and the decision is made by the first network element, the SMF may not need to learn of the access delay threshold for the application. In this case, the third indication information may include the identifier of the application, but does not include the access delay threshold for the application.

S604: The UE sends a session establishment request message to the SMF. Correspondingly, the SMF receives the session establishment request message from the UE.

The session establishment request message may be used by the UE to establish a session to the SMF, and the session is, for example, a PDU session. For example, if the UE requests to access a first application, the UE may request to establish the PDU session to the SMF, to transmit data corresponding to the first application.

S605: The SMF sends a first creation request message to an EASDF. Correspondingly, the EASDF receives the first creation request message from the SMF.

After receiving the session establishment request message, the SMF may select the EASDF, and may send the first creation request message to the EASDF. For the first creation request message, refer to S504 in the embodiment shown in FIG. 5.

S606: The EASDF sends a first creation response to the SMF. Correspondingly, the SMF receives the first creation response from the EASDF.

After receiving the first creation request message, the EASDF may send the first creation response to the SMF. For the first creation response, refer to S505 in the embodiment shown in FIG. 5.

S607: The SMF sends a session establishment accept message to the UE. Correspondingly, the UE receives the session establishment accept message from the SMF.

After receiving the first creation response, the SMF may send the session establishment accept message to the UE. The session establishment accept message may indicate that the PDU session is successfully established. The session establishment accept message may include address information of a DNS server. For example, the address information of the DNS server included in the session establishment accept message is address information of the EASDF.

S608: The UE sends a DNS query request to the EASDF. Correspondingly, the EASDF may receive the DNS query request.

For example, the UE may send the DNS query request to the EASDF based on the address information of the EASDF. The DNS query request may include an identifier of the first application.

S609: The EASDF sends the identifier of the first application to the SMF. Correspondingly, the SMF receives the identifier of the first application from the EASDF.

After receiving the DNS query request, the EASDF may determine, based on the identifier of the first application and a DNS handling rule, whether to send the identifier of the first application to the SMF. For example, an EAS sends the identifier of the first application to the SMF. Correspondingly, the SMF may receive the identifier of the first application. For example, the EASDF may invoke a service-based operation of the EASDF based on the identifier of the first application and the DNS handling rule to send the identifier of the first application. The service-based operation is, for example, referred to as a fifth service-based operation, and the fifth service-based operation may be used by the EASDF to send a request to the SMF. The fifth service-based operation may include the identifier of the first application. Correspondingly, the SMF may receive the fifth service-based operation. For example, the fifth service-based operation is Neasdf_DNSContext_Notify_Request. That the EASDF performs S609 is equivalent to notifying the SMF that a network can meet a requirement of the UE, and the SMF may further select the DNAI for the UE (or the first application for the UE).

S610: The SMF sends fifth information to the first network element. Correspondingly, the first network element receives the fifth information from the SMF. The fifth information may indicate an application that the UE requests to access, so that the SMF may determine, based on the fifth information, the application that the UE requests to access.

For example, the fifth information includes the identifier of the first application, to indicate that the UE requests to access the first application. The first network element may determine, based on the identifier of the first application, that the UE requests to access the first application. For example, the identifier of the first application is an FQDN of the first application. Optionally, the fifth information may further include at least one DNAI. In this embodiment of this application, the first network element may select the DNAI (for example, a first DNAI) for the UE. Therefore, after receiving the identifier of the first application from the EASDF, the SMF may perform S610. For example, the SMF may determine the at least one DNAI, and send the at least one DNAI and the identifier of the first application to the first network element by using the fifth information, so that the first network element selects the DNAI for the UE. For the at least one DNAI, how the SMF determines the at least one DNAI, and the like, refer to S509 in the embodiment shown in FIG. 5.

After receiving the fifth information, the first network element may learn that the UE requests to access the first application. Therefore, S610 and S301 in the embodiment shown in FIG. 3 are, for example, a same step. Alternatively, S610 is an optional implementation of S301.

S611: The first network element determines processing delays of N EASs in at least one DN, where the at least one DN is identified by the at least one DNAI. One DNAI may identify one DN, and the at least one DNAI may identify the at least one DN. One or more EASs may exist in a DN, and the N EASs are, for example, all or a part of EASs in the at least one DN.

The first network element may obtain the third information through S602b. The first network element may determine the processing delays of the N EASs in the at least one DN based on the third information and fourth information. The fourth information may include a quantity of access users of an EAS in each DN in the at least one DN. It may be understood that the fourth information includes quantities of access users of the N EASs in the at least one DN, and the fifth information includes an association between load of an EAS (for example, a quantity of access users of the EAS) and a processing delay of the EAS, so that the first network element can determine, from the third information, a processing delay corresponding to the fourth information.

Optionally, if the fifth information includes the at least one DNAI, the first network element may directly determine the at least one DNAI, to determine the processing delays of the N EASs in the at least one DN. Alternatively, if the fifth information does not include the at least one DNAI, the first network element may determine a processing delay of all or a part of EASs in DNs identified by all DNAIs that support the first application, where all or the part of the EASs in the DNs identified by all the DNAIs that support the first application may include the N EASs.

For more content of S611, for example, how the first network element determines the processing delays of the N EASs, refer to one or more steps in S509, S509a, or S509b in the embodiment shown in FIG. 5. For example, the process of determining the processing delays of the N EASs by the UDR in the one or more steps may be referenced.

S612: The first network element selects the first DNAI for the UE. An EAS in a DN identified by the first DNAI supports the first application. For example, the first network element selects the first DNAI from the at least one DNAI, and the UE may access the first application supported by the EAS in the DN identified by the first DNAI, to obtain a service corresponding to the first application. A sum of a first delay and a second delay may be less than or equal to an access delay threshold for the first application. Alternatively, optionally, a sum of a first delay, a second delay, and a third delay may be less than or equal to an access delay threshold for the first application. S612 and S302 in the embodiment shown in FIG. 3 are, for example, a same step. Alternatively, S612 is an optional implementation of S302. Therefore, for descriptions of concepts such as the first delay, the second delay, and the third delay, refer to S302.

Optionally, in S612, the first network element may select the first DNAI for the UE from the at least one DNAI based on the processing delays of the N EASs, a delay A, a delay C, or a transmission delay corresponding to the at least one DNAI, and the access delay threshold for the first application.

The first network element may determine the processing delays of the N EASs through S611 described above and obtain the access delay threshold for the first application, and may further obtain, through S601, the delay A, the delay C, or the transmission delay corresponding to each DNAI in the K DNAIs. For example, the K DNAIs include the at least one DNAI. Therefore, the first network element may select a DNAI for the UE from the at least one DNAI based on the processing delays of the N EASs, the delay A, the delay C, or the transmission delay corresponding to the at least one DNAI, and the access delay threshold for the first application. The selected DNAI may be referred to as a selected DNAI. For example, if the first network element selects the first DNAI, the first DNAI may be referred to as the selected DNAI. For a process of selecting the DNAI and the like, refer to S510 in the embodiment shown in FIG. 5.

S613: The first network element sends the first DNAI to the SMF. Correspondingly, the SMF receives the first DNAI from the first network element.

S614: The SMF sends an ECS option to the EASDF. Correspondingly, the EASDF receives the ECS option from the SMF.

After receiving the ECS option, the EASDF may add the ECS option to a DNS query message, and send the DNS query message to the DNS server. After receiving the ECS option, the DNS server may determine a specific EAS in the DN identified by the first DNAI. For example, the DNS server determines a first EAS, and the DNS server may send address information of the first EAS to the EASDF. In this embodiment of this application, all EASs in a DN identified by a DNAI support a same application, and performance of all EASs in a DN identified by a DNAI is the same or similar. Therefore, the first EAS selected by the DNS server can meet the access delay threshold for the first application, that is, a sum of the first delay and a second delay may be less than or equal to the access delay threshold for the first application, or a sum of the first delay, a second delay, and a third delay may be less than or equal to the access delay threshold for the first application.

For more content of S614, refer to S511 in the embodiment shown in FIG. 5.

S615: The SMF selects a ULCL/BP and a local PSA based on the first DNAI. For this step, refer to S512 in the embodiment shown in FIG. 5. For example, S615 occurs before S614, or occurs after S614. This is not limited.

S616: The EASDF sends address information of the first EAS to the UE. Correspondingly, the UE receives the address information from the EASDF.

For example, if the EASDF determines the first EAS in the first DNAI, the EASDF may send a DNS response to the UE, where the DNS response may include the address information, for example, an IP address, of the first EAS. For example, S616 occurs before S615, or occurs after S615. This is not limited.

Optionally, the EASDF may further send the address information of the first EAS to the SMF. In this case, the SMF may receive the address information of the first EAS. This step may occur after S615. In addition, for example, this step occurs before S616, occurs after S616, or occurs at the same time with S616.

S617: The first network element updates a quantity of access users of the first EAS. For example, in S617, the first network element may increase the quantity of access users of the first EAS by 1. Because the first network element stores the third information and the first information, the first network element may maintain the third information, and the UDR does not need to maintain the third information. Therefore, the first network element may update the third information, for example, update a quantity that is of access users of an EAS and that is indicated by the third information. Optionally, S617 may occur after S616, and/or after the step in which the EASDF sends the address information of the first EAS to the SMF.

For example, the SMF sends a second request to the first network element. Correspondingly, the UDR receives the second request from the SMF. The second request may indicate that the quantity of access users of the first EAS in the DN identified by the first DNAI changes. Therefore, S617 may also be understood as: The SMF notifies the first network element that the quantity of access users of the first EAS in the DN identified by the first DNAI changes. The change may be an increase or a decrease. In S617, the change is an increase. Therefore, the second request may specifically indicate that the quantity of access users of the first EAS in the DN identified by the first DNAI increases. Alternatively, the second request may indicate the first network element to increase the quantity of access users of the first EAS in the DN identified by the first DNAI. For example, the second request may include first indication information, and the first indication information indicates the first network element to increase the quantity of access users of the first EAS in the DN identified by the first DNAI, or indicates that the quantity of access users of the first EAS in the DN identified by the first DNAI increases. Optionally, the second request may further include the address information of the first EAS and the first DNAI, so that the first network element learns that the second request is specific to the first EAS in the DN identified by the first DNAI. Optionally, the second request may further include an identifier of the UE and/or the identifier of the first application. For example, the identifier of the UE may include a SUPI of the UE, and the identifier of the first application may include the FQDN corresponding to the first application.

A quantity of access users of an EAS may increase or decrease. For example, if a session between the UE and the SMF is released, the UE is disconnected from the EAS, and the quantity of access users of the first EAS decreases.

Therefore, optionally, the method may further include S618 to S620.

S618: The SMF releases the session between the SMF and the UE, where the session is, for example, the session established through steps S604, S607, and the like. After the session is released, the UE is disconnected from the first EAS.

S619: The SMF sends a third request to the first network element. Correspondingly, the first network element receives the third request from the SMF.

The third request may indicate that the quantity of access users of the first EAS in the DN identified by the first DNAI changes. Therefore, S619 may also be understood as: The SMF notifies the first network element that the quantity of access users of the first EAS in the DN identified by the first DNAI changes. The change may be an increase or a decrease. In S619, the change is a decrease. Therefore, the third request may specifically indicate that the quantity of access users of the first EAS in the DN identified by the first DNAI decreases. Alternatively, the third request may indicate the first network element to decrease the quantity of access users of the first EAS in the DN identified by the first DNAI. For example, the third request may include second indication information, and the second indication information indicates that the quantity of access users of the first EAS in the DN identified by the first DNAI decreases, or indicates the first network element to decrease the quantity of access users of the first EAS in the DN identified by the first DNAI. Optionally, the third request may include the address information of the first EAS and the first DNAI, so that the first network element learns that the third request is specific to the first EAS in the DN identified by the first DNAI. Optionally, the third request may further include the identifier of the UE and/or the identifier of the first application.

S620: The first network element updates the quantity of access users of the first EAS. For example, in S620, the first network element may decrease the quantity of access users of the first EAS by 1.

A quantity of access users of the first EAS by which the first network element needs to decrease is related to, for example, a quantity of UE identifiers included in the third request. For example, if the third request includes C3 UE identifiers, the first network element may decrease the quantity of access users of the first EAS by C3. An example in which C3=1 is used in this embodiment of this application.

Alternatively, the third request may not include the identifier of the UE. In this case, the first network element may decrease the quantity of users of the first EAS by 1 by default.

According to the solution in this embodiment of this application, the sum of the first delay and the second delay may be less than or equal to the access delay threshold for the first application (or the sum of the first delay, the second delay, and the third delay is less than or equal to the access delay threshold for the first application). This is equivalent to considering both the transmission delay corresponding to the DNAI and the processing delay of the EAS during the DNAI selection, so that the selected first DNAI is more conducive to quickly accessing the first application by the UE, and the UE can obtain a faster response from the EAS for the access to the application. This helps reduce a data transmission delay between the UE and the EAS that supports the application, to improve experience of accessing the service of the application by a user using the UE. In addition, in this embodiment of this application, a DNAI selection function is set in the first network element, and does not need to be distributed in a plurality of network elements. This reduces an interaction process between network elements, and can reduce transmission overheads and the processing delay.

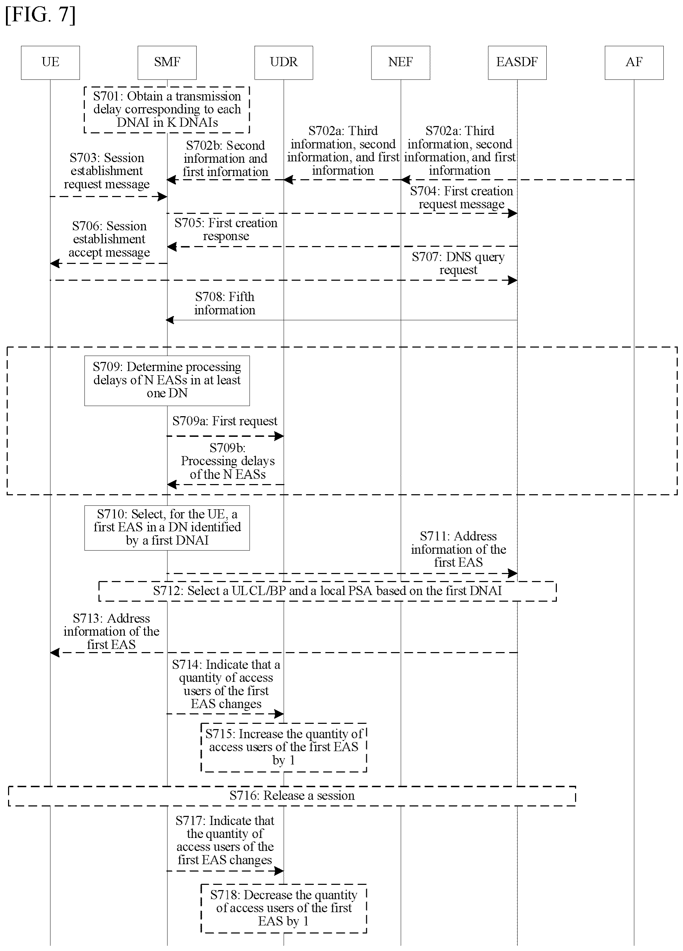

The following describes a fifth communication method provided in an embodiment of this application. FIG. 7 is a flowchart of the method.

S701: An SMF obtains a delay A, a delay C, or a transmission delay corresponding to each DNAI in K DNAIs (obtaining the transmission delay is used as an example in FIG. 7), where K is a positive integer.

For more descriptions of S701, refer to S501 in the embodiment shown in FIG. 5.

S702a: An AF sends third information, second information, and first information to a NEF. Correspondingly, the NEF receives the third information, the second information, and the first information from the AF. The NEF sends the third information, the second information, and the first information to a second network element. Correspondingly, the second network element receives the third information, the second information, and the first information from the NEF. An example in which the second network element is a UDR is used in this embodiment of this application. The step in which the NEF sends the third information and the first information to the UDR may also be understood as: The NEF stores the third information and the first information in the UDR.

S702b: The UDR sends the second information and the first information to the SMF. Correspondingly, the SMF receives the second information and the first information from the UDR.

The second information may include address information of N EASs in a DN identified by at least one DNAI, where at least one DN is identified by the at least one DNAI. One DNAI may identify one DN, and the at least one DNAI may identify the at least one DN. One or more EASs may exist in a DN, and the N EASs are, for example, all or a part of EASs in the at least one DN. An address of an EAS is, for example, an IP address of the EAS. For example, refer to Table 4 shown in FIG. 14. The second information may include one or more items in Table 4. One row in Table 4 represents a DNAI that can support one application and an EAS in a DN identified by the DNAI (the EAS is an EAS that can support the application and that is in the DN identified by the DNAI). In this case, one row in Table 4 is considered as one item.

In Table 4, an EAS whose IP address is #1 in a DN identified by a DNAI #1 supports an FQDN #1, an EAS whose IP address is #1 in a DN identified by a DNAI #2 also supports the FQDN #1, an EAS whose IP address is #3 in the DN identified by the DNAI #1 supports an FQDN #2, and so on. It can be learned that in this embodiment of this application, one or more EASs may exist in a DN identified by a DNAI. Different EASs may support a same application, or different EASs may support different applications. This is flexible.

For more content of S702a and S702b, for example, content of the third information and the first information, refer to S502a and S502b in the embodiment shown in FIG. 5.

S703: UE sends a session establishment request message to the SMF. Correspondingly, the SMF receives the session establishment request message from the UE. The session establishment request message may be used by the UE to establish a session to the SMF, and the session is, for example, a PDU session. For example, if the UE requests to access a first application, the UE may request to establish the PDU session to the SMF, to transmit data corresponding to the first application.

S704: The SMF sends a first creation request message to an EASDF. Correspondingly, the EASDF receives the first creation request message from the SMF. For more content of S704, refer to S504 in the embodiment shown in FIG. 5.

S705: The EASDF sends a first creation response to the SMF. Correspondingly, the SMF receives the first creation response from the EASDF. For more content of S705, refer to S505 in the embodiment shown in FIG. 5.

S706: The SMF sends a session establishment accept message to the UE. Correspondingly, the UE receives the session establishment accept message from the SMF. For more content of S706, refer to S506 in the embodiment shown in FIG. 5.

S707: The UE sends a DNS query request to the EASDF. Correspondingly, the EASDF receives the DNS query request from the UE. For example, the UE may send the DNS query request to the EASDF based on address information of the EASDF. The DNS query request may include an identifier of the first application.

S708: The EASDF sends fifth information to a first network element. Correspondingly, the first network element receives the fifth information from the EASDF. In this embodiment of this application, the first network element is, for example, the SMF, and the SMF is used as an example below.

The fifth information may indicate an application that the UE requests to access, so that the SMF may determine, based on the fifth information, the application that the UE requests to access. For example, the fifth information includes the identifier of the first application, to indicate that the UE requests to access the first application, so that the first network element may determine, based on the identifier of the first application, that the UE requests to access the first application. For example, the identifier of the first application is an FQDN of the first application. For example, after receiving the DNS query request, the EASDF may determine, based on the identifier of the first application and a DNS handling rule, whether to send the identifier of the first application to the SMF. An example in which the EASDF sends the identifier of the first application to the SMF is used in this embodiment of this application.

Optionally, S708 may be performed after S707. For example, in S708, the EASDF may invoke a service-based operation of the EASDF to send the fifth information to the SMF. The service-based operation is, for example, referred to as a sixth service-based operation, and the sixth service-based operation may be used by the EASDF to send a request to the SMF. The sixth service-based operation may include the fifth information. Correspondingly, the SMF may receive the sixth service-based operation. For example, the sixth service-based operation is Neasdf_DNSContext_Notify_Request. That the EASDF performs S708 is equivalent to notifying the SMF that a network can meet a requirement of the UE. After receiving the fifth information, the SMF may select a DNAI for the UE (or the first application for the UE).

After receiving the fifth information, the SMF may learn that the UE requests to access the first application. Therefore, S708 and S301 in the embodiment shown in FIG. 3 are, for example, a same step. Alternatively, it is understood that S708 is an optional implementation of S301.

For more descriptions of S708, refer to S508 in the embodiment shown in FIG. 5.

S709: The SMF determines processing delays of the N EASs in the DN identified by the at least one DNAI.

For example, similar to S509 in the embodiment shown in FIG. 5, S709 may include S709a and S709b.

S709a: The SMF sends a first request to the UDR. Correspondingly, the UDR receives the first request from the SMF.

S709a and S401 in the embodiment shown in FIG. 4 are, for example, a same step. Alternatively, it is understood that S709a is an optional implementation of S401.

S709b: The UDR sends a response to the first request to the SMF. Correspondingly, the SMF receives the response from the UDR. The response may include the processing delays of the N EASs.

One or more EASs may exist in a DN identified by a DNAI. In this embodiment of this application, an example in which different EASs in a DN identified by a DNAI can support a same application or different applications is used. In addition, in this embodiment of this application, an example in which performance of different EASs in a DN identified by a DNAI is the same or different is also used. Therefore, in this embodiment of this application, a processing delay of an EAS in a DN identified by a DNAI may include processing delays of all EASs in the DN identified by the DNAI. For example, if the at least one DNAI includes a second DNAI, and E EASs exist in a DN identified by the second DNAI, processing delays of the E EASs may include the processing delays of all the E EASs. E is a positive integer less than or equal to N, and the second DNAI may be any DNAI in the at least one DNAI. In this case, the processing delays that are of the N EASs and that are determined by the UDR may include a processing delay of each EAS in the N EASs. For example, a quantity of the at least one DNAI is 3, and seven EASs exist in total in DNs identified by the three DNAIs (for example, an EAS 1 and an EAS 2 exist in a DN identified by a DNAI #1, an EAS 3, an EAS 4, and an EAS 5 exist in a DN identified by a DNAI #2, and an EAS 6 and an EAS 7 exist in a DN identified by a DNAI #3). In this case, processing delays of the seven EASs in the DNs identified by the three DNAIs may include a processing delay of each EAS in the seven EASs.

S709b and S402 in the embodiment shown in FIG. 4 are, for example, a same step. Alternatively, it is understood that S709b is an optional implementation of S402.

For more descriptions of steps such as S709, S709a, and S709b, refer to S509, S509a, and S509b in the embodiment shown in FIG. 5.

S710: The SMF selects, for the UE, a first EAS in a DN identified by a first DNAI. The first EAS supports the first application. The UE may access the first application supported by the first EAS, to obtain a service corresponding to the first application. A sum of a first delay and a second delay may be less than or equal to an access delay threshold for the first application. Alternatively, optionally, a sum of a first delay, a second delay, and a third delay may be less than or equal to an access delay threshold for the first application. For descriptions of concepts such as the first delay, the second delay, and the third delay, refer to S302 in the embodiment shown in FIG. 3.

Optionally, in S710, the SMF may select, for the UE from the N EASs based on the processing delays of the N EASs, a delay A, a delay C, or a transmission delay corresponding to the at least one DNAI, the address information of the N EASs, and the access delay threshold for the first application, the first EAS in the DN identified by the first DNAI.

In S701, the SMF obtains the delay A, the delay C, or the transmission delay corresponding to each DNAI in the K DNAIs. For example, the K DNAIs include the at least one DNAI. In S702b, the SMF obtains the access delay threshold for the first application and the address information of the N EASs. In S709, the SMF determines the processing delays of the N EASs. In conclusion, the SMF may select an EAS for the UE from the N EASs based on the processing delays of the N EASs, the delay A, the delay C, or the transmission delay corresponding to the at least one DNAI, the address information of the N EASs, and the access delay threshold for the first application. A DNAI corresponding to the selected EAS (that is, the EAS is located in a DN identified by the DNAI) may be referred to as a selected DNAI. For example, if the SMF selects a first EAS in a DN identified by a first DNAI, the first DNAI may be referred to as the selected DNAI.

In this embodiment of this application, the SMF may determine a processing delay of each EAS in a DN identified by a DNAI, and the processing delay of each EAS may be considered for the EAS determining. For example, the SMF may determine a sum of a delay A, a delay C, or a transmission delay corresponding to each DNAI in the at least one DNAI and a processing delay of each EAS in a DN identified by the DNAI, and P sum values may be determined in total, where P is a positive integer. For example, P is equal to a total quantity of EASs in the at least one DN identified by the at least one DNAI. The SMF may determine, from the P sum values, a sum value that is less than or equal to the access delay threshold for the first application, determine a DNAI corresponding to the sum value as the first DNAI, and determine an EAS corresponding to the sum value as the first EAS. Optionally, the sum value determined by the SMF may not only be less than the access delay threshold for the first application, but also be a smallest value in the P sum values, so that the UE can obtain better quality of service.

Optionally, the SMF may first determine the EAS based on the delay A or the delay C corresponding to the DNAI (whether to use the delay A or the delay C may be preconfigured, predefined in a protocol, or autonomously determined by the SMF). For example, if the SMF determines at least one sum value based on the delay A or the delay C corresponding to the DNAI, the SMF may determine a first sum value from the at least one sum value. For example, the first sum value is a smallest value in the at least one sum value, and the first sum value corresponds to the first EAS. If the first sum value is less than or equal to the access delay threshold for the first application, the SMF may further determine a sum value of the first sum value and the third delay. For example, the sum value is referred to as a sum value A. If the sum value A is also less than or equal to the access delay threshold for the first application, the SMF may finally select the first EAS for the UE. If the sum value A is greater than the access delay threshold for the first application, the SMF may not select the first EAS for the UE. In this case, it is considered that the EAS selection fails, or it is considered that the DNAI selection and the EAS selection fail. Alternatively, if the first sum value is greater than the access delay threshold for the first application (because the first sum value is the smallest value in the at least one sum value, the at least one sum value is all greater than the access delay threshold for the first application), the SMF may not need to determine a sum value of the first sum value and the third delay, and does not select the first EAS for the UE. In this case, it is considered that the EAS selection fails, or it is considered that the DNAI selection and the EAS selection fail.

Alternatively, whether the SMF selects the EAS based on the delay A, the delay C, or the transmission delay corresponding to the DNAI may be preconfigured, predefined in a protocol, or autonomously determined by the SMF. For example, if it is preconfigured to select the EAS based on the transmission delay corresponding to the DNAI, the SMF may select an EAS for the UE from the N EASs based on the processing delays of the N EASs, the transmission delay corresponding to the at least one DNAI, and the access delay threshold for the first application. For another example, if it is preconfigured to select the DNAI based on the delay A corresponding to the DNAI, the SMF may select an EAS for the UE from the N EASs based on the processing delays of the N EASs, the delay A corresponding to the at least one DNAI, and the access delay threshold for the first application, without considering a delay B corresponding to the DNAI.

For example, the SMF selects the EAS based on the transmission delay corresponding to the DNAI. For example, the SMF determines that DNAIs that can be accessed by the UE in a current location of the UE include the DNAI #1 and the DNAI #2. In addition, according to Table 4, EASs that support the FQDN #1 include the EAS whose IP address is #1 in the DN identified by the DNAI #1, for example, an EAS 1, and include the EAS whose IP address is #2 in the DN identified by the DNAI #2, for example, an EAS 2. In this case, the SMF may determine a transmission delay for the DNAI #1 and a transmission delay for the DNAI #2. For example, according to Table 1-1, the transmission delay for the DNAI #1 is 50 ms, and the transmission delay for the DNAI #1 is 45 ms. The SMF may determine, based on the response from the UDR in S709b, a processing delay of an EAS in the DN identified by the DNAI #1 and a processing delay of an EAS in the DN identified by the DNAI #2. For example, it is determined that a processing delay of the EAS 1 is 20 ms, and a processing delay of the EAS 2 is 40 ms. The SMF may determine that a sum of the transmission delay for the DNAI #1 and the processing delay of the EAS 1 is 70 ms, and a sum of the transmission delay for the DNAI #2 and the processing delay of the EAS 2 is 85 ms. For example, the first application that the UE requests to access is the FQDN #1; and according to Table 3, the access delay threshold for the first application is 80 ms. In this case, the SMF may determine that the EAS 1 in the DN identified by the DNAI #1 can meet the access delay threshold for the first application; and may select, for the UE, the EAS 1 in the DN identified by the DNAI #1, or may select the DNAI #1 and the EAS 1 for the UE.

As described above, the P sum values determined by the SMF may be all greater than the access delay threshold for the first application, or the sum value of the first sum value corresponding to the first EAS and the third delay may be greater than the access delay threshold for the first application. In this case, none of the N EASs meets the access delay threshold for the first application, and the SMF may not select a DNAI or an EAS for the UE. To be specific, a process of selecting the DNAI fails, or a process of selecting the DNAI and the EAS fails, and the access of the UE also fails. Alternatively, the SMF may select an EAS from the N EASs for the UE. For example, the SMF selects an EAS corresponding to the first sum value. Although the EAS cannot meet the access delay threshold for the first application, an access success rate of the UE can be improved as much as possible.

Optionally, S710 may include one step, and the step is: The SMF selects, for the UE, the first EAS in the DN identified by the first DNAI. Alternatively, S710 may include two steps. A first step (for example, referred to as step a) includes: The SMF selects the first DNAI for the UE. A second step (for example, referred to as step b) includes: The SMF selects, for the UE, the first EAS in the DN identified by the first DNAI. Alternatively, S710 may include one step, and the step is: The SMF selects, for the UE, the first EAS in the DN identified by the first DNAI. Before S710, this embodiment of this application further includes one step (for example, referred to as step c), and step c is: The SMF selects the first DNAI for the UE.

If S710 includes two steps, or step c is further included before S710, in S710 or step c, the SMF may select the first DNAI for the UE from the at least one DNAI based on the processing delays of the N EASs in the at least one DN identified by the at least one DNAI, the delay A, the delay C, or the transmission delay corresponding to the at least one DNAI, and the access delay threshold for the first application. In addition, in S710, the SMF may select, based on the address information of the N EASs, the first EAS for the UE from the DN identified by the first DNAI. Furthermore, when S710 includes two steps or step c is further included before S710, for other related content, refer to the foregoing descriptions.

If S710 includes one step or two steps, S710 and S302 in the embodiment shown in FIG. 3 may be a same step, or S710 is an optional implementation of S302. Alternatively, if step c is further included before S710, step c and S302 in the embodiment shown in FIG. 3 may be a same step, or step c is an optional implementation of S302, and S710 is a step after S302.

In this embodiment of this application, the SMF obtains the address information of the N EASs through S702b, so that the SMF can select the EAS for the UE, and a DNS server does not need to select the EAS for the UE. The SMF selects the EAS for the UE based on a plurality of parameters such as the processing delay of the EAS. Compared with a solution in which a DNS server selects an EAS, this embodiment of this application is more conducive to selecting an EAS having a minimum delay with the UE, so that user experience is better. In addition, in this embodiment of this application, EASs in a DN identified by a DNAI do not need to support a same application, and performance of these EASs does not need to be the same. For example, EASs in a DN identified by a DNAI may support a same application or different applications, and performance of the EASs may be the same or different, so that network deployment is more flexible.

S711: The SMF sends address information of the first EAS to the EASDF. Correspondingly, the EASDF receives the address information of the first EAS.

An address of the first EAS is, for example, an IP address of the first EAS. Optionally, the SMF may send the first DNAI and the address information of the first EAS to the EASDF in S711. Using the network architecture shown in FIG. 2A as an example, for example, the SMF invokes a service-based operation of the EASDF to send the address information of the first EAS to the EASDF. The service-based operation is, for example, referred to as a seventh service-based operation. The seventh service-based operation may be used by the SMF to send a response to the EASDF. The seventh service-based operation may include the address information of the first EAS, and optionally include the first DNAI. Correspondingly, the EASDF may receive the seventh service-based operation. For example, the seventh service-based operation is Neasdf_DNSContext_Notify_Response. The seventh service-based operation is, for example, a response to the sixth service-based operation in S708.

Because the EASDF has obtained the address information of the first EAS from the SMF, the EASDF does not need to interact with the DNS server. For example, the EASDF may not send a DNS query message to the DNS server.

S712: The SMF selects a ULCL/BP and a local PSA based on the first DNAI. For more descriptions of this step, refer to S512 in the embodiment shown in FIG. 5. For example, S712 occurs before S711, or occurs after S711. This is not limited.

S713: The EASDF sends the address information of the first EAS to the UE. Correspondingly, the UE receives the address information from the EASDF.

For example, if the EASDF receives the first EAS in the first DNAI from the SMF, the EASDF may send a DNS response to the UE, where the DNS response may include the address information of the first EAS. Because the EASDF obtains the address information of the first EAS from the SMF, optionally, it may also be considered that the SMF indirectly sends the address information of the first EAS to the UE. For example, S713 occurs before S712, or occurs after S712. This is not limited.

Through the foregoing process, a quantity of access users of the first EAS increases (that is, the UE is added). To enable the UDR to more accurately determine a processing delay of the first EAS, the method may further include S714 and S715.

S714: The SMF sends a second request to the UDR. Correspondingly, the UDR receives the second request from the SMF. The second request message may indicate that the quantity of access users of the first EAS in the DN identified by the first DNAI changes. For more descriptions of this step, refer to S514 in the embodiment shown in FIG. 5.

S715: The UDR updates the quantity of access users of the first EAS. For example, in S715, the UDR may increase the quantity of access users of the first EAS by 1. For more descriptions of this step, refer to S515 in the embodiment shown in FIG. 5.

A quantity of access users of an EAS may increase or decrease. For example, if a session between the UE and the SMF is released, the UE is disconnected from the EAS, and the quantity of access users of the first EAS decreases. Therefore, optionally, the method may further include S716 to S718.

S716: The SMF releases the session between the SMF and the UE. The session is, for example, the session established through steps S703, S706, and the like. After the session is released, the UE is disconnected from the first EAS.

S717: The SMF sends a third request to the UDR. Correspondingly, the UDR receives the third request from the SMF. The third request may indicate that the quantity of access users of the first EAS in the DN identified by the first DNAI changes. Therefore, S717 may also be understood as: The SMF notifies the UDR that the quantity of access users of the first EAS in the DN identified by the first DNAI changes. For more descriptions of this step, refer to S517 in the embodiment shown in FIG. 5.

S718: The UDR updates the quantity of access users of the first EAS. For example, in S718, the UDR may decrease the quantity of access users of the first EAS by 1. For more descriptions of this step, refer to S518 in the embodiment shown in FIG. 5.

According to the solution in this embodiment of this application, the sum of the first delay and the second delay may be less than or equal to the access delay threshold for the first application (or the sum of the first delay, the second delay, and the third delay is less than or equal to the access delay threshold for the first application). This is equivalent to considering both the transmission delay corresponding to the DNAI and the processing delay of the EAS during the DNAI selection, so that the selected first DNAI is more conducive to quickly accessing the first application by the UE, and the UE can obtain a faster response from the EAS for the access to the application. This helps reduce a data transmission delay between the UE and the EAS that supports the application, to improve experience of accessing the service of the application by a user using the UE. In addition, in this embodiment of this application, the SMF can obtain the address information of the EAS, so that the SMF can select the EAS for the UE. This helps select an EAS with a shorter overall delay, to improve user experience.

FIG. 8 is a diagram of a structure of a communication apparatus according to an embodiment of this application. The communication apparatus 800 may be the first network element in the embodiment shown in any one of FIG. 3 to FIG. 7 or a circuit system of the first network element, and is configured to implement the method corresponding to the first network element in the foregoing method embodiments. Alternatively, the communication apparatus 800 may be the second network element in the embodiment shown in any one of FIG. 3 to FIG. 7 or a circuit system of the second network element, and is configured to implement the method corresponding to the second network element in the foregoing method embodiments. For a specific function, refer to descriptions in the foregoing method embodiments. For example, the circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located in different physical locations, and may be located on different integrated circuits. Optionally, different processors may be integrated into one or more processors, for example, integrated into one or more integrated circuits.

Optionally, the communication apparatus 800 includes one or more memories 803, configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to: send information to another apparatus, or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 801 may include a general-purpose central processing unit (central processing unit, CPU), a microprocessor, an application-specific integrated circuit (application-specific integrated circuit, ASIC), or one or more integrated circuits configured to control program execution for the solutions of this application.

The communication line 802 may include a path for transferring information between the foregoing components.

The communication interface 804 is configured to communicate, by using any apparatus such as a transceiver, with another device or a communication network, for example, Ethernet, a radio access network (radio access network, RAN), a wireless local area network (wireless local area network, WLAN), or a wired access network.

The memory 803 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disk storage (including a compact disc, a laser disc, an optical disc, a digital versatile disc, a Blu-ray disc, and the like), a magnetic disk storage medium or another magnetic storage device, or any other medium that can be configured to carry or store expected program code in an instruction or data structure form and that can be accessed by a computer, but is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions of this application, and the processor 801 controls the execution. The processor 801 is configured to execute the computer-executable instructions stored in the memory 803, to implement the steps performed by the first network element in the embodiment shown in any one of FIG. 3 to FIG. 7, or implement the steps performed by the second network element in the embodiment shown in any one of FIG. 3 to FIG. 7.

Optionally, the computer-executable instructions in this embodiment of this application may also be referred to as application program code. This is not specifically limited in this embodiment of this application.

In a specific implementation, in an embodiment, the processor 801 may include one or more CPUs, for example, a CPU 0 and a CPU 1 in FIG. 8.

In a specific implementation, in an embodiment, the communication apparatus 800 may include a plurality of processors, for example, the processor 801 and a processor 805 in FIG. 8. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 8 is a chip, for example, a chip of the first network element or a chip of the second network element, the chip includes the processor 801 (and may further include the processor 805), the communication line 802, and the communication interface 804, and optionally, may further include the memory 803. Specifically, the communication interface 804 may be an input interface, a pin, a circuit, or the like. The memory 803 may be a register, a buffer, or the like. The processor 801 and the processor 805 each may be a general-purpose CPU, a microprocessor, an ASIC, or one or more integrated circuits configured to control program execution for the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used. For example, when each functional module is obtained through division based on each corresponding function, FIG. 9 is a diagram of an apparatus. The apparatus 900 may be the first network element or the second network element in the foregoing method embodiments, or may be a chip of the first network element or a chip of the second network element. The apparatus 900 includes a sending unit 901, a processing unit 902, and a receiving unit 903.

It should be understood that the apparatus 900 may be configured to implement the steps performed by the first network element or the second network element in the communication methods in embodiments of this application. For related features, refer to the embodiment shown in any one of FIG. 3 to FIG. 7. Details are not described herein again.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, a function/an implementation process of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the method performed by the first network element or the second network element in the foregoing method embodiments is implemented. In this way, the functions in the foregoing embodiments may be implemented in a form of a software functional unit and sold or used as an independent product. Based on such an understanding, the technical solutions of this application essentially, the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first network element or the second network element in any one of the foregoing method embodiments.

An embodiment of this application further provides a processing apparatus, including a processor and an interface. The processor is configured to perform the method performed by the first network element or the second network element in any one of the foregoing method embodiments.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Optionally, the storage medium may alternatively be integrated into a processor. The processor and the storage medium may be disposed in an ASIC, and the ASIC may be disposed in a terminal device. Optionally, the processor and the storage medium may alternatively be disposed in different parts of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the first network element or the second network element may perform a part or all of the steps in embodiments of this application. The steps or operations are merely examples. In embodiments of this application, other operations or variations of various operations may be further performed. In addition, the steps may be performed in a sequence different from the sequence presented in embodiments of this application, and not all the operations in embodiments of this application may need to be performed.

**Claims**

1. A communication method, wherein the method comprises:

   learning, by a first network element, that a terminal device requests to access a first application; and
   selecting, by the first network element, a first data network access identifier for the terminal device, wherein a sum of a first delay and a second delay is less than or equal to an access delay threshold for the first application; the first delay is a transmission delay between the terminal device and a core network device corresponding to the first data network access identifier or a transmission delay between an access network device serving the terminal device and a core network device corresponding to the first data network access identifier; and the second delay is a processing delay of an edge application server in a first data network, the first data network access identifier identifies the first data network, and the edge application server is configured to support the first application.

2. The method according to claim 1, wherein a sum of the first delay, the second delay, and a third delay is less than or equal to the access delay threshold for the first application, and the third delay comprises a transmission delay between the core network device and the edge application server.

3. The method according to claim 1 or 2, wherein

   the method further comprises: obtaining, by the first network element, at least one data network access identifier, wherein N edge application servers in at least one data network all support the first application, and the at least one data network access identifier identifies the at least one data network, wherein N is a positive integer; and the selecting, by the first network element, the first data network access identifier for the terminal device comprises:
   selecting, by the first network element, the first data network access identifier for the terminal device from the at least one data network access identifier.

4. The method according to claim 3, wherein the method further comprises:
   obtaining, by the first network element, processing delays of the N edge application servers.

5. The method according to claim 4, wherein the obtaining, by the first network element, the processing delays of the N edge application servers comprises:

receiving, by the first network element, association information from a second network element, wherein the association information indicates an association between load and a processing delay that are of each edge application server in the N edge application servers; and

determining, by the first network element, the processing delays of the N edge application servers based on the association information and user information, wherein the user information comprises a quantity of access users of each edge application server in the N edge application servers.

6.  The method according to claim 4, wherein the obtaining, by the first network element, the processing delays of the N edge application servers comprises:

sending, by the first network element, a first request to a second network element; and
receiving, by the first network element, a response to the first request, wherein the response comprises the processing delays of the N edge application servers.

7.  The method according to claim 6, wherein the first request comprises one or more of the following:

an identifier of the terminal device;
an identifier of the first application; or
the at least one data network access identifier.

8.  The method according to any one of claims 4 to 7, wherein
the processing delays of the N edge application servers comprise a processing delay of one or more or all of the N edge application servers.

9.  The method according to any one of claims 1 to 8, wherein the method further comprises:
receiving, by the first network element, address information of the N edge application servers from the second network element, wherein the N edge application servers are located in the at least one data network, the at least one data network is identified by the at least one data network access identifier, and the at least one data network comprises the first data network.

10. The method according to claim 9, wherein the method further comprises:
sending, by the first network element to the terminal device, address information of a first edge application server in the first data network, wherein the first edge application server is an edge application server selected by the first network element for the terminal device.

11. The method according to any one of claims 1 to 10, wherein the method further comprises:
receiving, by the first network element, the access delay threshold from the second network element.

12. The method according to any one of claims 1 to 11, wherein the method further comprises:

notifying, by the first network element, the second network element that a quantity of access users of a first edge application server changes; or
updating, by the first network element, a quantity of access users of a first edge application server; wherein the first edge application server is in the first data network.

13. A communication method, wherein the method comprises:
receiving, by a second network element, a first request from a first network element,

wherein the first request is for requesting to obtain a processing delay of an edge application server in a data network; and
sending, by the second network element, a response to the first request to the first network element, wherein the response comprises processing delays of N edge application servers in at least one data network, and the at least one data network is identified by at least one data network access identifier, wherein N is a positive integer.

14. The method according to claim 13, wherein the first request comprises one or more of the following:

an identifier of a terminal device that at least one edge application server in the N edge application servers is capable of serving;

an identifier of a first application that at least one edge application server in the N edge application servers supports; or

the at least one data network access identifier.

15. The method according to claim 13 or 14, wherein the method further comprises: receiving, by the second network element, association information from a network exposure function network element, wherein the association information indicates an association between load and a processing delay that are of each edge application server in the N edge application servers; and

determining, by the second network element, the processing delays of the N edge application servers based on the association information and user information, wherein the user information comprises a quantity of access users of each edge application server in the N edge application servers.

16. The method according to any one of claims 13 to 15, wherein the method further comprises:

learning, by the second network element, that a quantity of access users of a first edge application server changes, wherein the first edge application server is located in a first data network in the at least one data network, and the at least one data network is identified by the at least one data network access identifier; and updating, by the second network element, the quantity of access users of the first edge application server.

17. An apparatus, wherein the apparatus comprises a processing unit, wherein

the processing unit is configured to learn that a terminal device requests to access a first application; and the processing unit is further configured to select a first data network access identifier for the terminal device, wherein

a sum of a first delay and a second delay is less than or equal to an access delay threshold for the first application; the first delay is a transmission delay between the terminal device and a core network device corresponding to the first data network access identifier or a transmission delay between an access network device serving the terminal device and a core network device corresponding to the first data network access identifier; and the second delay is a processing delay of an edge application server in a first data network, the first data network access identifier identifies the first data network, and the edge application server is configured to support the first application.

18. An apparatus, wherein the apparatus comprises a processing unit and a transceiver unit, wherein

the transceiver unit is configured to receive a first request from a first network element, wherein the first request is for requesting to obtain a processing delay of an edge application server in a data network; and the transceiver unit is further configured to send a response to the first request to the first network element, wherein the response comprises processing delays of N edge application servers in at least one data network, and the at least one data network is identified by at least one data network access identifier, wherein N is a positive integer.

19. An apparatus, comprising one or more processors, configured to execute computer program instructions, wherein when the computer program instructions are executed by the one or more processors, the apparatus is enabled to perform the method according to any one of claims 1 to 12, or the apparatus is enabled to perform the method according to any one of claims 13 to 16.

20. A communication system, comprising a first network element and a second network element, wherein

the first network element is configured to perform the method according to any one of claims 1 to 12, wherein the first network element is specifically configured to obtain a processing delay of an edge application server from the second network element; and

the second network element is configured to perform the method according to any one of claims 13 to 16.

21. A communication method, comprising:

sending, by a first network element, a first request to a second network element, wherein the first request is for requesting to obtain a processing delay of an edge application server in a data network;

receiving, by the second network element, the first request, and sending a response to the first request to the first network element, wherein the response comprises processing delays of N edge application servers in at least one data network, and

the at least one data network is identified by at least one data network access identifier, wherein N is a positive integer; and

receiving, by the first network element, the response.

22. A communication system, comprising a first network element and a terminal device, wherein

the first network element is configured to: learn that the terminal device requests to access a first application, select a first data network access identifier and/or a first edge application server in a first data network for the terminal device, and send address information of the first edge application server to the terminal device, wherein the first data network access identifier identifies the first data network, and the first edge application server is configured to support the first application; and the terminal device is configured to receive the address information, wherein

a sum of a first delay and a second delay is less than or equal to an access delay threshold for the first application; the first delay is a transmission delay between the terminal device and a core network device corresponding to the first data network access identifier or a transmission delay between an access network device serving the terminal device and a core network device corresponding to the first data network access identifier; and the second delay is a processing delay of the first edge application server.

23. A communication method, comprising:

learning, by a first network element, that a terminal device requests to access a first application;

selecting, by the first network element, a first data network access identifier and/or a first edge application server in a first data network for the terminal device, wherein the first data network access identifier identifies the first data network, and the first edge application server is configured to support the first application;

sending, by the first network element, address information of the first edge application server to the terminal device; and

receiving, by the terminal device, the address information, wherein

a sum of a first delay and a second delay is less than or equal to an access delay threshold for the first application; the first delay is a transmission delay between the terminal device and a core network device corresponding to the first data network access identifier or a transmission delay between an access network device serving the terminal device and a core network device corresponding to the first data network access identifier; and the second delay is a processing delay of the first edge application server.

24. A computer-readable storage medium, wherein the computer-readable storage medium comprises a computer program; and when the computer program is run on a computing device, the computing device is enabled to perform the method according to any one of claims 1 to 12, or the computing device is enabled to perform the method according to any one of claims 13 to 16.

25. A chip, wherein the chip is coupled to a memory, and is configured to read and execute program instructions stored in the memory, to implement the method according to any one of claims 1 to 12 or implement the method according to any one of claims 13 to 16.

26. A computer program product, wherein when the computer program product is invoked by a computer, the computer is enabled to perform the method according to any one of claims 1 to 12, or the computer is enabled to perform the method according to any one of claims 13 to 16.

[FIG. 1A]

[FIG. 1B]

[FIG. 2A]

| NSSF | NEF | NRF | | PCF | UDM | AF |

Nnssf    Nnef    Nnrf    Npcf    Nudm    Naf

Nausf    Namf    Nsmf

| AUSF | AMF | | SMF |

N1    N2    N4

| UE | (R)AN | N3 | UPF | N6 | DN |

[FIG. 2B]

| NSSF | AUSF | N13 | UDM |

N22    N12    N8    N10

| AMF | N11 | SMF | N7 | PCF | N5 | AF |

N14    N15

N1    N2    N4

| UE | (R)AN | N3 | UPF | N6 | DN |

N9

[FIG. 3]

```
                                                          ⌐S301
┌─────────────────────────────────────────────┐ ⟋⌐
│  A first network element learns that UE requests to access │⟋
│               a first application             │
└─────────────────────────────────────────────┘
                        │
                        ▼
┌─────────────────────────────────────────────┐
│   The first network element selects a first DNAI for the │
│   UE, where a sum of a first delay and a second delay is │
│   less than or equal to an access delay threshold for the │
│   first application, the first delay is a transmission delay │   ⌐S302
│        between the UE and a core network device        │ ⟋
│ corresponding to the first DNAI or a transmission delay │⟋
│  between an access network device serving the UE and a │
│    core network device corresponding to the first DNAI, │
│  and the second delay is a processing delay of an EAS in │
│        an area indicated by the first DNAI             │
└─────────────────────────────────────────────┘
```

[FIG. 4]

```
┌──────────────┐                              ┌──────────────┐
│ First network │                              │Second network│
│   element    │                              │   element    │
└──────┬───────┘                              └──────┬───────┘
       │   S401: First request, for requesting to obtain a   │
       │        processing delay of an EAS in a DN           │
       │───────────────────────────────────────────────────▶│
       │                                                     │
       │   S402: Response to the first request, including    │
       │   processing delays of N EASs in at least one DN    │
       │◀───────────────────────────────────────────────────│
       │                                                     │
```

[FIG. 5]

[FIG. 6]

EP 4 664 861 A1

[FIG. 7]

| UE | SMF | UDR | NEF | EASDF | AF |

S701: Obtain a transmission delay corresponding to each DNAI in K DNAIs

S702a: Third information, second information, and first information

S702a: Third information, second information, and first information

S702b: Second information and first information

S703: Session establishment request message

S704: First creation request message

S706: Session establishment accept message

S705: First creation response

S707: DNS query request

S708: Fifth information

S709: Determine processing delays of N EASs in at least one DN

S709a: First request

S709b: Processing delays of the N EASs

S710: Select, for the UE, a first EAS in a DN identified by a first DNAI

S711: Address information of the first EAS

S712: Select a UL CL/BP and a local PSA based on the first DNAI

S713: Address information of the first EAS

S714: Indicate that a quantity of access users of the first EAS changes

S715: Increase the quantity of access users of the first EAS by 1

S716: Release a session

S717: Indicate that the quantity of access users of the first EAS changes

S718: Decrease the quantity of access users of the first EAS by 1

39

[FIG. 8]

Communication
apparatus 800

Processor 801

Processor 805

Memory 803

CPU 0 / CPU 1

CPU 0 / CPU 1

Communication
line 802

Communication
interface 804

[FIG. 9]

Apparatus 900

Sending unit 901

Processing
unit 902

Receiving
unit 903

[FIG. 10]

Table 1-1

| DNAI | Transmission delay (including an uplink transmission delay and/or a downlink transmission delay) |
|---|---|
| DNAI #1 | 50 ms |
| DNAI #2 | 45 ms |
| DNAI #3 | 40 ms |

[FIG. 11]

Table 1-2

| DNAI | UPF | Transmission delay (including an uplink transmission delay and/or a downlink transmission delay) |
|---|---|---|
| DNAI #1 | UPF 1 | 50 ms |
| | UPF 2 | 48 ms |
| DNAI #2 | UPF 3 | 45 ms |
| | UPF 4 | 48 ms |
| DNAI #3 | UPF 5 | 40 ms |
| | UPF 6 | 42 ms |

[FIG. 12]

Table 2

| DNAI | EAS | Quantity of access users | Processing delay |
|---|---|---|---|
| DNAI #1 | EAS 1 (FQDN #1) | Quantity #1 of users, for example, 1000 (the quantity #1 of users indicates a maximum quantity of users who can be processed by the EAS without performance deterioration of the EAS) | T1, for example, 30 ms |
| | | Quantity #2 of users, for example, 3000 (the quantity #2 of users indicates a maximum quantity of users who can be processed by the EAS with best efforts, but performance deteriorates) | T2, for example, 50 ms |
| DNAI #2 | EAS 2 (FQDN #1) | Quantity #3 of users, for example, 500 (the quantity #3 of users indicates a maximum quantity of users who can be processed by the EAS without performance deterioration of the EAS) | T3, for example, 25 ms |
| | | Quantity #4 of users, for example, 1200 (the quantity #4 of users indicates a maximum quantity of users who can be processed by the EAS with best efforts, but performance deteriorates) | T4, for example, 40 ms |

[FIG. 13]

Table 3

| Identifier of an application | Access delay threshold for the application |
|---|---|
| FQDN #1 | 80 ms |
| FQDN #2 | 70 ms |
| FQDN #3 | 60 ms |

[FIG. 14]

Table 4

| Identifier of an application | IP address (address) of an EAS |
|---|---|
| FQDN #1 | DNAI #1: IP address #1<br>DNAI #2: IP address #2 |
| FQDN #2 | DNAI #1: IP address #3<br>DNAI #3: IP address #4 |
| FQDN #3 | DNAI #2: IP address #5<br>DNAI #3: IP address #6 |

## INTERNATIONAL SEARCH REPORT

| International application No. |
|---|
| **PCT/CN2024/079496** |

**A. CLASSIFICATION OF SUBJECT MATTER**

H04L 67/61(2022.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, 3GPP: 边缘应用服务器, 时延, 延时, 延迟, 时间, 处理时延, 处理时间, 传输时延, 往返时延, EAS, Edge Application Server, UDR, SMF, process, latency, time, delay

**C. DOCUMENTS CONSIDERED TO BE RELEVANT**

| Category* | Citation of document, with indication, where appropriate, of the relevant passages | Relevant to claim No. |
|---|---|---|
| A | HUAWEI et al. "EAS Deployment Information Provision from AF" *3GPP TSG-WG SA2 Meeting #146E E-Meeting, S2-2106031*, 10 August 2021 (2021-08-10), full text, section 2 | 1-26 |
| A | CN 115334081 A (HUAWEI TECHNOLOGIES CO., LTD.) 11 November 2022 (2022-11-11) entire document | 1-26 |
| A | CN 114125808 A (CHINA UNITED NETWORK COMMUNICATIONS GROUP CO., LTD.) 01 March 2022 (2022-03-01) entire document | 1-26 |
| A | WO 2022147313 A1 (CONVIDA WIRELESS, LLC) 07 July 2022 (2022-07-07) entire document | 1-26 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 May 2024** | **14 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/079496** |

| Patent document cited in search report | | | Publication date (day/month/year) | Patent family member(s) | | | Publication date (day/month/year) |
| --- | --- | --- | --- | --- | --- | --- | --- |
| CN | 115334081 | A | 11 November 2022 | WO | 2022222817 | A1 | 27 October 2022 |
| CN | 114125808 | A | 01 March 2022 | CN | 114125808 | B | 27 October 2023 |
| WO | 2022147313 | A1 | 07 July 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310248889